# EUROPEAN PATENT SPECIFICATION

(11) **EP 2 358 791 B1**
(45) Date of publication and mention of the grant of the patent: **26.12.2012**
(21) Application number: 09806149.2
(22) Date of filing: 26.11.2009
(51) Int. Cl.: C08G 77/10, C09D 183/04, C09J 7/02, C09D 183/05, C09D 183/07

(54) **SOLVENTLESS CURED RELEASE COATING-FORMING ORGANOPOLYSILOXANE COMPOSITION AND SHEET-FORM SUBSTRATE HAVING A CURED RELEASE COATING**
LÖSUNGSMITTELFREIE GEHÄRTETE TRENNBESCHICHTUNGSBILDENDE ORGANOPOLYSILOXANZUSAMMENSETZUNG UND FLÄCHIGES SUBSTRAT MIT GEHÄRTETER TRENNBESCHICHTUNG
COMPOSITION D'ORGANOPOLYSILOXANE FORMANT COUCHAGE ANTI-ADHÉSIF DURCI SANS SOLVANT ET SUBSTRAT EN FEUILLE AYANT UN COUCHAGE ANTI-ADHÉSIF DURCI

(30) Priority: 26.11.2008 JP 2008301224
(43) Date of publication of application: 24.08.2011
(73) Proprietor: Dow Corning Toray Co., Ltd., Tokyo, 100-0004 (JP); Dow Corning Corporation, Midland, Michigan 48686-0994 (US)
(72) Inventor: HORI, Seiji, Ichihara-shi Chiba 299-0108 (JP); YAMADA, Takateru, Ichihara-shi Chiba 299-0108 (JP); EKELAND, Robert Alan, South Carolina, 29651 (US)
(74) Representative: Polypatent
(86) International application number: PCT/JP2009/070280
(87) International publication number: WO 2010/061967

(56) References cited:
- EP-A2- 1 070 734
- US-A1- 2006 128 921

## Description

### Technical Field

The present invention relates to a solventless cured release coating-forming organopolysiloxane composition that can form a cured coating on the surface of a sheet-form substrate, for example, paper, polyolefin-laminated paper, thermoplastic resin film, metal foil, and so forth, and that can do so with little mist production during high-speed application to the sheet-form substrate surface, wherein the resulting cured coating exhibits an excellent release performance to tacky substances and a smooth slipperiness. The present invention also relates to a sheet-form substrate that has a cured release coating yielded by the cure of this composition.

### Background Art

Solution-type organopolysiloxane compositions prepared by dissolving an addition reaction-curing organopolysiloxane composition comprising alkenyl-functional diorganopolysiloxane gum, organohydrogenpolysiloxane, and a hydrosilylation reaction catalyst in an organic solvent such as toluene are well known and in general use as organopolysiloxane compositions used to form - on the surface of sheet-form substrates such as various papers, laminated papers, synthetic films, metal foils, and so forth - cured coatings that exhibit release properties to tacky substances.

As replacements for the aforementioned solution-type addition reaction-curing organopolysiloxane compositions, an emulsion-type organopolysiloxane composition afforded by the emulsification of an addition reaction-curing organopolysiloxane composition in water has been introduced in Patent Reference 1 (JP 47-032072 A) and has entered into practical use, while a solventless organopolysiloxane composition comprising only a low-viscosity addition reaction-curing organopolysiloxane composition that is liquid at ambient temperature has been introduced in Patent Reference 2 (JP 53-003979 B) and has also entered into practical use. Based on safety and environmental considerations, there has been demand in recent years in a broad range of applications for a solventless cured release coating-forming organopolysiloxane composition as a replacement for the solution types, and in response a solventless cured release coating-forming organopolysiloxane composition of this type has been introduced in Patent Reference 3 (JP 2004-307691 A).

However, because the vinyl-functional diorganopolysiloxane used as the base ingredient in the existing solventless cured release coating-forming organopolysiloxane compositions has a low viscosity of about 50 to 1000 cSt, these compositions, while exhibiting an excellent coatability, have yielded a cured coating with a poor slipperiness and as a result have had the disadvantage of limitations on their application. Thus, when a solventless cured release coating-forming organopolysiloxane composition having such a low-viscosity vinyl-functional diorganopolysiloxane as its base ingredient is employed as a release agent for kraft tape, the resulting cured coating exhibits a poor slipperiness and the process of pasting the kraft tape on, for example, cardboard, cannot be smoothly carried out; moreover, the pressure-sensitive adhesive may not be completely adhered and peeling off may occur. When the cured coating is formed on paper, laminated paper, or plastic film, the cured coating again exhibits a poor slipperiness, which has resulted in problems such as tape damage and failure of the tape to rotate smoothly, which can then be a cause of secondary problems from a process standpoint.

Furthermore, when a release paper or a release film is fabricated by forming a cured coating on paper or a plastic film through the application to paper or plastic film of a solventless, addition reaction-curing organopolysiloxane composition having as its base ingredient such a low-viscosity, vinyl-functional diorganopolysiloxane, the poor slipperiness of the cured coating has resulted in problems, arising due to contact between the cured coating and metal or plastic rolls prior to take-up of the release paper or release film, such as damage to the cured coating, the generation of uneven release characteristics when subsequently coated with a tacky substance, and an inability to smoothly take up the release paper or release film.

In order to improve the slipperiness of the cured coating, Patent Reference 4 (JP 61-159480 A) proposes a solventless, addition reaction-curing organopolysiloxane for release paper applications, in which the base ingredients are 1) a straight-chain organopolysiloxane that has a viscosity of 50 to 100,000 cP and a vinyl content of 0.5 to 10.0 mole % and 2) a straight-chain organopolysiloxane that has a low vinyl content and a viscosity of at least 100,000 cP. Patent Reference 5 (JP 61-264052 A) proposes a solventless, addition reaction-curing silicone composition for release paper applications that has a composition having a viscosity of 50 to 10,000 cps and that has as base ingredients a straight-chain organopolysiloxane having a viscosity of 50 to 10,000 cP and a vinyl content that is 0.5 to 10.0% of the total organic groups and a substantially straight-chain organopolysiloxane having a viscosity of at least 100,000 cP and the hydroxyl group at the molecular chain terminals. However, these compositions, because they contain a high-viscosity straight-chain organopolysiloxane, have suffered from the problem of mist generation during high-speed application on the surface of sheet-form substrates.

In order, on the other hand, to reduce misting during the high-speed application of a solventless, addition reaction-curing silicone coating composition to a flexible sheet-form material, Patent Reference 6 (JP 2004-501262 A) and Patent Reference 7 (JP 2004-501264 A) teach the incorporation, as a mist control agent, of a liquid silicone obtained by a platinum-catalyzed crosslinking reaction between an organohydrogensilicon compound (for example, a polymethylhydrogensiloxane) and an alkenyl-functional compound (for example, a vinyl-terminated polydimethylsiloxane) with either present in a large excess (SiH/alkenyl at least 4.6 or alkenyl/SiH at least 4.6).

The incorporation of a hydrosilylation reaction product from a (meth)acryloxyalkyl-functional polyorganosiloxane and a polyorganohydrogensiloxane is introduced in Patent Reference 8 (JP 2005-343974 A), while the incorporation of a tin-catalyzed condensation reaction product from a silanol-endblocked diorganopolysiloxane and a polyorganohydrogensiloxane is introduced in Patent Reference 9 (JP 2006-290919 A). However, the solventless silicone compositions that incorporate these mist control agents suffer from the problem of, inter alia, a diminished release performance.

In addition, Patent Reference 10 (JP 2006-506509 A) teaches the use as a mist control agent of a compound afforded by the partial crosslinking of an organohydrogensilicon compound with a long-chain olefin and a vinyl-functional MQ resin. However, in the case of solventless silicone compositions that contain a high-viscosity organopolysiloxane for the purpose of imparting slipperiness to the cured coating, the incorporation of these mist control agents has been an unsatisfactory approach from a practical perspective because it provides little mist-reducing effect with these compositions.

US 2006/0128921 discloses a process for release coating of a polymer film with a composition comprising a siloxane (A) having alkenyl groups, a crosslinkig agent (B) having organohydrogensiloxane groups and a catalyst for the hydrosilylation reaction between (A) and (B), comprising applying the composition to the polymer film and heating the coated film to cure the release coating. The release coating composition additionally contains a polydiorganosiloxane (C) consisting essentially of diorganosiloxane units of the formula -(SiR₂-O)- in which each R group, which may be the same or different, is an alkyl group having 1 to 4 carbon atoms, to improve anchorage of the release coating on the polymer film.

Patent References
[Patent Reference 1] JP 47-032072 A
[Patent Reference 2] JP 53-003979 B
[Patent Reference 3] JP 2004-307691 A
[Patent Reference 4] JP 61-159480 A
[Patent Reference 5] JP 61-264052 A
[Patent Reference 6] JP 2004-501262 A
[Patent Reference 7] JP 2004-501264 A
[Patent Reference 8] JP 2005-343974 A
[Patent Reference 9] JP 2006-290919 A
[Patent Reference 10] JP 2006-506509 A

### Disclosure of the Invention

### Problems to Be Solved by the Invention

The present invention was pursued in order to solve the problems identified above. An object of the present invention is to provide a solventless cured release coating-forming organopolysiloxane composition that generates little mist during high-speed application to a sheet-form substrate and that when cured can form a coating that exhibits an improved slipperiness and an improved release performance to tacky substances. A further object of the present invention is to provide a sheet-form substrate that has a cured coating that exhibits an improved slipperiness and an improved release performance to tacky substances.

### Means Solving the Problems

The aforementioned objects are achieved by the following.
[1] A solventless cured release coating-forming organopolysiloxane composition having a viscosity at 25°C of 50 to 2,000 mPa·s comprising
   (A) 100 weight parts of a diorganopolysiloxane that has a viscosity at 25°C of 25 to 1,000 mPa·s and that has at least two alkenyl groups in each molecule;
   (B) 0.5 to 15 weight parts of a diorganopolysiloxane that has a viscosity at 25°C of at least 10,000 mPa·s and that has an aliphatically unsaturated group content of no more than 0.1 mole % (including 0 mole %);
   (C) 0.5 to 5 weight parts of a branched organopolysiloxane that has more than one SiO_{4/2} unit in the molecule, that has a viscosity at 25°C of at least 10,000 mPa·s, and that is a polymer product provided by an equilibration polymerization between
      a branched organosiloxane oligomer represented by the average siloxane unit formula (1)

      (SiO_{4/2})(R^{a}R^{b}₂SiO_{1/2})ₓ (1)

      wherein R^{a} is an organic group selected from the group consisting of C₂ to C₆ alkenyl, C₂ to C₆ alkynyl, and C₁ to C₆ alkyl, R^{b} is an organic group selected from the group consisting of C₁ to C₆ alkyl, phenyl, C₁ to C₆ alkoxy, acryloxyalkyl, and methacryloxyalkyl, and x is a number with an average value of 0.9 to 3, and
      a diorganosiloxane oligomer comprising the diorganosiloxane unit represented by the formula R₂SiO_{2/2} wherein R is a C₁ to C₈ alkyl group or phenyl group and at least 50 mole % of R is the C₁ to C₈ alkyl group;
   (D) an organohydrogenpolysiloxane that has a viscosity at 25°C of 1 to 1,000 mPa·s and that has at least two silicon-bonded hydrogen atoms in each molecule, in an amount sufficient to provide a value of 0.8 : 1 to 5 : 1 for the molar ratio of silicon-bonded hydrogen atoms in this organohydrogenpolysiloxane to the total quantity of aliphatically unsaturated groups in components (A), (B), and (C); and
   (E) a hydrosilylation reaction catalyst in a catalytic quantity.

   [1-1] The solventless cured release coating-forming organopolysiloxane composition according to [1], characterized in that the diorganosiloxane oligomer is cyclic.
   [1-2] The solventless cured release coating-forming organopolysiloxane composition according to [1] or [1-1], characterized in that x is a number with an average value of 0.95 to 2.5 or is a number with an average value of at least 0.95 and less than 1.05.
[2] The solventless cured release coating-forming organopolysiloxane composition according to [1], characterized in that component (C) is a polymer product provided by an equilibration polymerization of the aforementioned branched organosiloxane oligomer and the aforementioned diorganosiloxane oligomer in the presence of a phosphazene base catalyst or in the presence of a phosphazene base catalyst and a potassium silanolate catalyst.
   [2-1] The solventless cured release coating-forming organopolysiloxane composition according to [2], characterized in that the diorganosiloxane oligomer is cyclic.
[3] The solventless cured release coating-forming organopolysiloxane composition according to [1] or [2], characterized in that the molar ratio between the aforementioned branched organosiloxane oligomer and the aforementioned diorganosiloxane oligomer is a ratio that provides a molar ratio between the SiO_{4/2} unit and the R₂SiO_{2/2} unit of 1 : 100 to 1 : 1250.
   [3-1] The solventless cured release coating-forming organopolysiloxane composition according to [3], characterized in that the diorganosiloxane oligomer is cyclic.
   [3-2] The solventless cured release coating-forming organopolysiloxane composition according to [1] to [2-1], characterized in that the weight ratio between the aforementioned branched organosiloxane oligomer and the aforementioned diorganosiloxane oligomer is 0.2 : 99.8 to 4 : 96, 0.5 : 99.5 to 2 : 98, or 0.6 : 99.4 to 1.2 : 98.8.
[4] The solventless cured release coating-forming organopolysiloxane composition according to any of [1] to [3], characterized in that component (C) contains an average of at least two SiO_{4/2} units in each molecule.
   [4-1] The solventless cured release coating-forming organopolysiloxane composition according to [4], characterized in that component (C) contains an average of 1.05 to 4 SiO_{4/2} units in each molecule or an average of 2 to 4 SiO_{4/2} units in each molecule.
[5] The solventless cured release coating-forming organopolysiloxane composition according to any of [1] to [4], characterized in that component (C) is a gum or a liquid having a viscosity at 25°C of 10,000 to 1,250,000 mPa·s.
   [5-1] The solventless cured release coating-forming organopolysiloxane composition according to [5], characterized in that component (C) is a liquid having a viscosity at 25°C of 12,000 to 1,250,000 mPa·s.
[6] The solventless cured release coating-forming organopolysiloxane composition according to any of [1] to [5], characterized in that
   component (A) is represented by the average structural formula (2)

   R^{c}R₂SiO(RR^{c}SiO_{2/2})ₘ₁(R₂SiO_{2/2})ₘ₂SiR₂R^{c} (2)

   wherein R is a C₁ to C₈ alkyl group or phenyl group with the proviso that at least 50 mole % of R in the molecule is the C₁ to C₈ alkyl group, R^{c} is a C₂ to C₈ alkenyl group, **m1** is a number greater than or equal to zero, **m2** is a number greater than or equal to 1, and **m1** + **m2** is a number that provides this component with a viscosity at 25°C of 50 to 1,000 mPa·s;
   component (B) is represented by the average structural formula (3)

   R^{d}R₂SiO(RR^{c}SiO_{2/2})ₙ₁(R₂SiO_{2/2})ₙ₂SiR₂R^{d} (3)

   wherein R is a C₁ to C₈ alkyl group or phenyl group with the proviso that at least 50 mole % of R is the C₁ to C₈ alkyl group, R^{c} is a C₂ to C₈ alkenyl group, R^{d} is a group selected from the group consisting of C₁ to C₈ alkyl, C₂ to C₈ alkenyl, phenyl, C₁ to C₈ alkoxy, and hydroxyl group, 0 to 0.1% of the sum total of the R, R^{c}, and R^{d} in the molecule is the C₂ to C₈ alkenyl group, at least 50% of the sum total of the R, R^{c}, and R^{d} in the molecule is the C₁ to C₈ alkyl group, **n1** is a number greater than or equal to zero, **n2** is a number greater than or equal to 1, and **n1** + **n2** is a number that provides this component with a viscosity at 25°C of at least 10,000 mPa·s;
   component (C) comprises the SiO_{4/2} unit, the R^{a}R^{b}₂SiO_{1/2} unit wherein R^{a} is an organic group selected from the group consisting of C₂ to C₆ alkenyl, C₂ to C₆ alkynyl, and C₁ to C₆ alkyl and R^{b} is an organic group selected from the group consisting of C₁ to C₆ alkyl, phenyl, C₁ to C₆ alkoxy, acryloxyalkyl, and methacryloxyalkyl, and the R₂SiO_{2/2} unit wherein R is a C₁ to C₈ alkyl group or phenyl group with the proviso that at least 50 mole % of R is the C₁ to C₈ alkyl group; and
   the silicon-bonded organic groups in component (D) are a C₁ to C₈ alkyl group or phenyl group wherein at least 50 mole % thereof in the molecule is the C₁ to C₈ alkyl group.
[7] The solventless cured release coating-forming organopolysiloxane composition according to [6], characterized in that R in component (A) is methyl group; R^{c} in component (A) is vinyl group or hexenyl group; R in component (B) is methyl group; R^{c} in component (B) is vinyl group or hexenyl group; R^{d} in component (B) is a group selected from the group consisting of methyl group, vinyl group, phenyl group, and hydroxyl group; R^{a} in component (C) is vinyl group; R^{b} in component (C) is methyl group; R in component (C) is methyl group; and the silicon-bonded organic groups in component (D) are methyl group.
[8] A sheet-form substrate characterized in that a cured release coating from the solventless cured release coating-forming organopolysiloxane composition according to any of [1] to [5] is present on a surface of the sheet-form substrate.
[9] A sheet-form substrate characterized in that a cured release coating from the solventless cured release coating-forming organopolysiloxane composition according to [6] or [7] is present on a surface of the sheet-form substrate.
[10] The cured release coating-bearing sheet-form substrate according to [8] or [9], characterized in that the sheet-form substrate is paper, polyolefin-laminated paper, thermoplastic resin film, or metal foil.

### Effects of the Invention

The solventless cured release coating-forming organopolysiloxane composition of the present invention generates little mist during high-speed application to a sheet-form substrate and, when cured on a sheet-form substrate, forms a coating that exhibits an excellent slipperiness and an excellent release performance to tacky substances.
The cured release coating-bearing sheet-form substrate of the present invention exhibits an excellent slipperiness and an excellent release performance to tacky substances.

### Mode for Carrying Out the Invention

The solventless cured release coating-forming organopolysiloxane composition of the present invention characteristically has a viscosity at 25°C of 50 to 2,000 mPa·s and comprises
(A) 100 weight parts of a diorganopolysiloxane that has a viscosity at 25°C of 25 to 1,000 mPa·s and that has at least two alkenyl groups in each molecule;
(B) 0.5 to 15 weight parts of a diorganopolysiloxane that has a viscosity at 25°C of at least 10,000 mPa·s and that has an aliphatically unsaturated group content of no more than 0.1 mole % (including 0 mole %);
(C) 0.5 to 5 weight parts of a branched organopolysiloxane that has more than one SiO_{4/2} unit in the molecule, that has a viscosity at 25°C of at least 10,000 mPa·s, and that is a polymer product provided by an equilibration polymerization between
   a branched organosiloxane oligomer represented by the average siloxane unit formula (1)

   (SiO_{4/2})(R^{a}R^{b}₂SiO_{1/2})ₓ (1)

   wherein R^{a} is an organic group selected from the group consisting of C₂ to C₆ alkenyl, C₂ to C₆ alkynyl, and C₁ to C₆ alkyl, R^{b} is an organic group selected from the group consisting of C₁ to C₆ alkyl, phenyl, C₁ to C₆ alkoxy, acryloxyalkyl, and methacryloxyalkyl, and x is a number with an average value of 0.9 to 3, and
   a diorganosiloxane oligomer comprising the diorganosiloxane unit represented by the formula R₂SiO_{2/2} wherein R is a C₁ to C₈ alkyl group or phenyl group and at least 50 mole % of R is the C₁ to C₈ alkyl group;
(D) an organohydrogenpolysiloxane that has a viscosity at 25°C of 1 to 1,000 mPa·s and that has at least two silicon-bonded hydrogen atoms in each molecule, in an amount sufficient to provide a value of 0.8 : 1 to 5 : 1 for the molar ratio of silicon-bonded hydrogen atoms in this organohydrogenpolysiloxane to the total quantity of aliphatically unsaturated groups in components (A), (B), and (C); and
(E) a hydrosilylation reaction catalyst in a catalytic quantity.

Component (A), a diorganopolysiloxane that has a viscosity at 25°C of 50 to 1,000 mPa·s and that has at least two alkenyl groups in each molecule, is the base component of the solventless cured release coating-forming organopolysiloxane composition of the present invention. Crosslinking and curing proceed through a hydrosilylation reaction, i.e., an addition reaction, between this alkenyl groups and the silicon-bonded hydrogen atoms in the organohydrogenpolysiloxane that is component (D). Due to this, at least two silicon-bonded alkenyl groups must be present in each molecule. This alkenyl group can be exemplified by vinyl, allyl, butenyl, 5-hexenyl, octenyl, and decenyl. Vinyl and 5-hexenyl are preferred thereamong from the standpoints of reactivity and ease of production.

Based on a consideration of the curability and the properties of the cured coating, the alkenyl content in this component is preferably in the range of 0.2 to 10.0 mole % of the total silicon-bonded organic groups and is more preferably in the range of 0.5 to 5.0 mole % of the total silicon-bonded organic groups. This alkenyl group may be bonded on the diorganopolysiloxane only in molecular chain terminal position, only in side chain position, or in both positions.

The non-alkenyl organic groups bonded to silicon can be exemplified by a monovalent hydrocarbyl group such as alkyl, e.g., methyl, ethyl, propyl, butyl, pentyl, hexyl, aryl, e.g., phenyl, tolyl, xylyl, and aralkyl, e.g., benzyl, phenethyl. Preferred thereamong are an alkyl group and phenyl group, while methyl is particularly preferred.
Based on a consideration of the performance in high-speed application to a sheet-form substrate and the properties of the cured coating, component (A) has a viscosity at 25°C of 25 to 1,000 mPa·s and preferably of 45 to 500 mPa·s.

A representative example of this component (A) is the straight-chain diorganopolysiloxane represented by the average structural formula (2)

R^{c}R₂SiO(RR^{c}SiO_{2/2})ₘ₁(R²SiO_{2/2})ₘ₂SiR₂R^{c} (2)

wherein R is a C₁ to C₈ alkyl group or phenyl group with the proviso that at least 50 mole % of R in the molecule is the C₁ to C₈ alkyl group; R^{c} is a C₂ to C₈ alkenyl group; **m1** is a number greater than or equal to zero, **m2** is a number greater than or equal to 1; and **m1** + **m2** is a number that provides this component with a viscosity at 25°C of 50 to 1,000 mPa·s. Examples and preferred examples of the alkyl group and alkenyl group in this formula are the same as those already provided above. **m1/(m1** + **m2)** is preferably a number such that the R^{c} in the molecule is 0.2 to 10.0 mole % of the sum total of the R and R^{c} and is more preferably a number such that the R^{c} in the molecule is 0.5 to 5.0 mole % of the sum total of the R and R^{c}.

The following are specific examples of component (A), wherein Me denotes methyl, Vi denotes vinyl, He denotes hexenyl, and Ph denotes phenyl. ViMe₂SiO(Me₂SiO_{2/2})ₘ₂SiMe₂Vi ViMePhSiO(Me₂SiO_{2/2})ₘ₂SiPhMeVi ViMe₂SiO(MeViSiO_{2/2})ₘ₁(Me₂SiO_{2/2})ₘ₂SiMe₂Vi HeMe₂SiO(MeViSiO_{2/2})ₘ₁(Me₂SiO_{2/2})ₘ₂SiMe₂He ViMe₂SiO(MeHeSiO_{2/2})ₘ₁(Me₂SiO_{2/2})ₘ₂SiMe₂Vi Me₃SiO(MeViSiO_{2/2})ₘ₁(Me₂SiO_{2/2})ₘ₂SiMe₃ ViMe₂SiO(MeViSiO_{2/2})ₘ₁(MePhSiO_{2/2})ₘ₂SiMe₂Vi

Component (B), a diorganopolysiloxane that has a viscosity at 25°C of at least 10,000 mPa·s and that has an aliphatically unsaturated group content of no more than 0.1 mole % (including 0 mole %), functions to improve the release performance to tacky substances that is exhibited by the cured coating from the solventless cured release coating-forming organopolysiloxane composition of the present invention and also functions to endow this cured coating with slipperiness. Because component (B) either does not contain an aliphatically unsaturated group or contains aliphatically unsaturated groups at no more than 0.1 mole % with reference to the total silicon-bonded organic groups, it gradually ascends up onto the cured coating that is formed by the hydrosilylation reaction-based crosslinking between component (A) and component (D) and thereby imparts an excellent slipperiness to the surface of the cured coating. Viewed from this perspective, component (B) has a viscosity at 25°C of preferably at least 100,000 mPa·s and more preferably at least 1,000,000 mPa·s and more preferably is a so-called gum.

The silicon-bonded organic groups in component (B) can be exemplified by unsubstituted monovalent hydrocarbyl group, e.g., alkyl such as methyl, ethyl, propyl, butyl, pentyl, hexyl; aryl such as phenyl, tolyl, xylyl; aralkyl such as benzyl, phenethyl; alkenyl such as vinyl, allyl, butenyl, 5-hexenyl, octenyl, decenyl; and alkynyl; and by substituted monovalent hydrocarbyl group, e.g., aralkyl such as benzyl, phenethyl and perfluoroalkyl. Alkyl and phenyl are preferred thereamong with methyl being particularly preferred. A hydroxyl group and alkoxy group may be bonded in molecular chain terminal position.

A representative example of this component (B) is the straight-chain diorganopolysiloxane represented by the average structural formula (3)

R^{d}R₂SiO(RR^{c}SiO_{2/2})ₙ₁(R₂SiO_{2/2})ₙ₂SiR₂R^{d} (3)

wherein R is a C₁ to C₈ alkyl group or phenyl group with the proviso that at least 50 mole % of R is the C₁ to C₈ alkyl group; R^{c} is a C₂ to C₈ alkenyl group; R^{d} is a group selected from the group consisting of C₁ to C₈ alkyl, C₂ to C₈ alkenyl, phenyl, C₁ to C₈ alkoxy, and hydroxyl group; 0 to 0.1% of the sum total of the R, R^{c}, and R^{d} in the molecule is the C₂ to C₈ alkenyl group; at least 50% of the sum total of the R, R^{c}, and R^{d} in the molecule is the C₁ to C₈ alkyl group; **n1** is a number greater than or equal to zero; **n2** is a number greater than or equal to 1; and **n1** + **n2** is a number that provides this component with a viscosity at 25°C of at least 10,000 mPa·s.

Here, the C₁ to C₈ alkyl group encompassed by R and R^{d} can be exemplified by methyl, ethyl, propyl, butyl, pentyl, and hexyl wherein a typical example thereof is methyl. The C₂ to C₈ alkenyl group encompassed by R^{c} can be exemplified by vinyl, allyl, butenyl, hexenyl, and octenyl wherein typical examples thereof are vinyl, allyl, and hexenyl. The C₁ to C₈ alkoxy group encompassed by R^{d} can be exemplified by methoxy, ethoxy, and butoxy.

When too much alkenyl groups are present in the molecule, the slipperiness and the release performance to tacky substances once the composition has been cured on a sheet-form substrate are prone to be unsatisfactory. Because of this, the C₂ to C₈ alkenyl group is 0 to 0.1 % of the sum total of the R, R^{c}, and R^{d} in the molecule. Based on a consideration of the slipperiness and release performance to tacky substances or for tacky substances after the composition has been cured on a sheet-form substrate, at least 50% of the sum total of the R, R^{c}, and R^{d} in the molecule is the C₁ to C₈ alkyl group and particularly is methyl group.

**n1** + **n2** is a number that provides this component with a viscosity at 25°C of at least 10,000 mPa·s, preferably at least 100,000 mPa·s, and more preferably at least 1,000,000 mPa·s and most preferably is a number that causes this component to be a so-called gum.

The R^{d}R₂SiO_{1/2}unit in average structural formula (3) can be exemplified by Vi(Me)₂SiO_{1/2} unit, He(Me)₂SiO_{1/2} unit, ViMePhSiO_{1/2} unit, (Me)₃SiO_{1/2} unit, (Me)₂PhSiO_{1/2}unit, (HO)(Me)₂SiO_{1/2} unit, and (MeO)(Me)₂SiO_{1/2} unit. The RR^{c}Si0_{2/2} unit can be exemplified by MeViSiO_{2/2} unit and MeHeSiO_{2/2} unit. The R₂SiO_{2/2} unit can be exemplified by (Me)₂SiO_{2/2} unit and MePhSiO_{2/2} unit. In these units as well as in the description that follows, Vi denotes vinyl, Me denotes methyl, He denotes hexenyl, and Ph denotes phenyl.

Component (B) may contain a silicon-bonded alkenyl group in the molecule and thus be capable of undergoing a hydrosilylation reaction with component (D), or may contain the silicon-bonded hydroxyl group, i.e., silanol group in molecular chain terminal position and thus be capable of undergoing a condensation reaction with component (D), or may contain neither an alkenyl group nor a silanol group and thus be unreactive. Viewed from the perspective of the residual adhesiveness associated with the cured coating, and considered in order of preference, the more preferred component (B) contains alkenyl groups in the molecule and is thus capable of undergoing a hydrosilylation reaction with component (D) followed by component (B) that contains the silicon-bonded hydroxyl group i.e., silanol group in molecular chain terminal position and is thus capable of undergoing a condensation reaction with component (D).

Component (B) is incorporated at 0.5 to 15 weight parts per 100 weight parts of component (A). The reasons for this are as follows: the slipperiness and the release performance to tacky substances or for tacky substances once the composition has been cured on a sheet-form substrate are unsatisfactory at less than 0.5 weight part, while an excess slipperiness occurs at more than 15 weight parts.

Component (C) is a branched organopolysiloxane that has more than one SiO_{4/2} unit in the molecule, that has a viscosity at 25°C of at least 10,000 mPa·s, and that is a polymer product, i. e., a branched organopolysiloxane provided by an equilibration polymerization between
a branched organosiloxane oligomer represented by the average siloxane unit formula (1)

(SiO_{4/2})(R^{a}R^{b}₂SiO_{1/2})ₓ (1)

wherein R^{a} is an organic group selected from the group consisting of C₂ to C₆ alkenyl, C₂ to C₆ alkynyl, and C₁ to C₆ alkyl, R^{b} is an organic group selected from the group consisting of C₁ to C₆ alkyl, phenyl, C₁ to C₆ alkoxy, acryloxyalkyl, and methacryloxyalkyl, and x is a number with an average value of 0.9 to 3, and
a diorganosiloxane oligomer comprising the diorganosiloxane unit represented by the formula R₂SiO_{2/2} wherein R is a C₁ to C₈ alkyl group or phenyl group and at least 50 mole % of R is the C₁ to C₈ alkyl group.
The incorporation of this component (C) in the addition reaction-curing organopolysiloxane composition comprising components (A), (B), (D), and (E) has the functional effect of reducing the amount of mist produced by this composition during the high-speed application of the composition to a sheet-form substrate.

Component (C) can be readily produced by an equilibration polymerization, preferably by an equilibration polymerization to a prescribed viscosity, in the presence of a strong acid catalyst or a strong base catalyst, of a diorganosiloxane oligomer comprising the R₂SiO_{2/2} unit wherein R is a C₁ to C ₈ alkyl group or phenyl group with the proviso that at least 50 mole % of R is the C₁ to C₈ alkyl group, with a branched organosiloxane oligomer represented by the average siloxane unit formula (SiO_{4/2})(R^{a}R^{b}₂SiO_{1/2})x wherein R^{a} is an organic group selected from the group consisting of C₂ to C₆ alkenyl, C₂ to C₆ alkynyl, and C₁ to C₆ alkyl, R^{b} is an organic group selected from the group consisting of C₁ to C₆ alkyl, phenyl, C₁ to C₆ alkoxy, acryloxyalkyl, and methacryloxyalkyl, and x is a number with an average value of 0.9 to 3.

In the branched organosiloxane oligomer represented by the formula (SiO_{4/2})(R^{a}R^{b}₂SiO_{1/2})ₓ wherein R^{a} is an organic group selected from the group consisting of C₂ to C ₆ alkenyl, C₂ to C₆ alkynyl, and C₁ to C₆ alkyl, R^{b} is an organic group selected from the group consisting of C₁ to C₆ alkyl, phenyl, C₁ to C₆ alkoxy, acryloxyalkyl, and methacryloxyalkyl, and x is a number with an average value of 0.9 to 3, x is preferably a number with an average value of 0.95 to 2.5 and is particularly preferably a number with an average value of at least 0.95 but less than 1.5. Examples of this x are 1, 2, and 3

The C₂ to C₆ alkenyl group can be exemplified by vinyl, allyl, butenyl, and hexenyl wherein vinyl is a typical example thereof. The C₁ to C₆ alkyl group can be exemplified by methyl, ethyl, propyl, butyl, pentyl, and hexyl wherein methyl is a typical example thereof. The C₁ to C₆ alkoxy group can be exemplified by methoxy, ethoxy, and butoxy. The acryloxyalkyl group can be exemplified by 3-acryloxypropyl, while the methacryloxyalkyl group can be exemplified by 3-methacryloxypropyl.

This branched organosiloxane oligomer can have, for example, the following chemical structural formula.

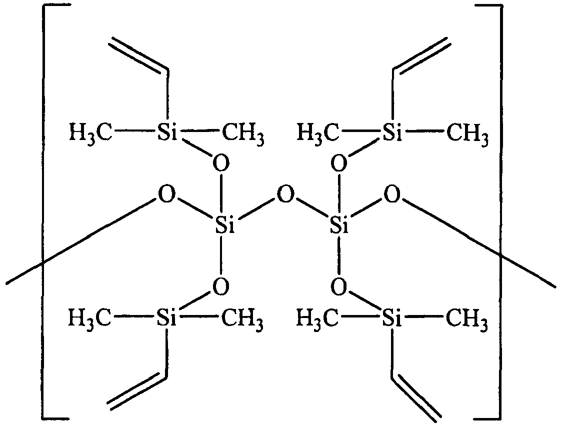

This branched organosiloxane oligomer can be prepared, for example, by an equilibration reaction in the presence of water between a tetraalkoxysilane and a hexaorganodisiloxane with the formula (R^{a}R^{b}₂SiO)₂O wherein R^{a} and R^{b} in this formula are defined as above. Tetraethoxysilane is a preferred example of the tetraalkoxysilane. Tetramethyldivinyldisiloxane is a preferred example of the hexaorganodisiloxane. The equilibration reaction is preferably carried out in the presence of a strong base catalyst or a strong acid catalyst, vide infra. The amount of water used here is preferably an amount sufficient for the hydrolysis and condensation of the tetraalkoxysilane.

The R₂SiO_{2/2} unit constituting the diorganosiloxane oligomer can be exemplified by (CH₃)₂SiO_{2/2} unit, CH₃C₆H₅SiO_{2/2} unit, and CH₃C₆H₁₃SiO_{2/2} unit. The diorganosiloxane oligomer preferably has a degree of polymerization of 3 to 10. The diorganosiloxane oligomer is preferably cyclic, but may be straight chain. The cyclic diorganosiloxane oligomer can be specifically exemplified by hexamethylcyclotrisiloxane, octamethylcyclotetrasiloxane, decamethylcyclopentasiloxane, dodecamethylcyclohexasiloxane, tetramethyltetrahexylcyclotetrasiloxane, tetramethyltetraphenylcyclotetrasiloxane, tetramethyltetraalkylcyclotetrasiloxane wherein the alkyl is not methyl and is a C₂ to C₈ alkyl, and tetramethyltetravinylcyclotetrasiloxane. The straight-chain diorganosiloxane oligomer can be exemplified by straight-chain dimethylsiloxane oligomer and straight-chain methylalkylsiloxane oligomer wherein the alkyl is not methyl and is a C₂ to C₈ alkyl; the terminal group for the straight-chain diorganosiloxane oligomer is preferably silanol group.

The molar ratio between the aforementioned branched organosiloxane oligomer and the aforementioned diorganosiloxane oligomer in the equilibration polymerization is preferably a ratio that provides a molar ratio between the SiO_{4/2} unit and the R₂SiO_{2/2} unit preferably of 1 : 100 to 1 : 1250 and more preferably is a ratio that provides 1 : 120 to 1 : 500.
In addition, the weight ratio between the branched organosiloxane oligomer and the diorganosiloxane oligomer in the equilibration polymerization is preferably 0.2 : 99.8 to 4 : 96, more preferably 0.5 to 99.5 to 2 : 98, and even more preferably 0.6 : 99.4 to 1.2 : 98.8.

The equilibration polymerization is preferably carried out by heating. The strong acid catalyst or strong base catalyst should be able to bring about ring opening of the cyclic diorganosiloxane oligomer and to bring about a condensation reaction between that product or the straight-chain diorganosiloxane oligomer and the branched organosiloxane oligomer, and should also be capable of equilibration, but is otherwise not particularly limited. The strong acid catalyst can be exemplified by trifluoromethanesulfonic acid, sulfuric acid, acid clay, and phosphonitrile chloride. Two or more of these strong acid catalysts may be used in combination. The strong base catalyst can be exemplified by phosphazene base catalysts, potassium hydroxide, and potassium diorganosilanolate catalysts. Two or more of these strong base catalysts may be used in combination. A preferred example of combined use is the combined use of a phosphazene base catalyst with a potassium diorganosilanolate.

The phosphazene base catalysts, which are the most preferred equilibration polymerization catalysts, are given, for example, by the following general formulas.

[(R¹₂N)₃P=N-]ₖ(R¹₂N)₃₋ₖP=NR²

{[(R¹₂N)₃P=N-]ₖ(R¹₂N)₃₋ₖP-N(H)R²}⁺[A⁻]

{[(R¹2N)₃P=N-]₁(R¹₂N)₄₋₁P}⁺[A⁻]

The R¹ in a particular formula may be the same at each position or may differ between positions and is hydrogen or a possibly substituted hydrocarbyl group, preferably C₁ to C₄ alkyl group, or two of the R₁ groups bonded to the same N atom may be bonded to each other to complete a heterocycle and preferably a 5- or 6-membered ring. R² is hydrogen atom or a possibly substituted hydrocarbyl group, preferably C₁ to C₂₀ alkyl group and more preferably C₁ to C₁₀ alkyl group. k is 1, 2, or 3 and preferably is 2 or 3. 1 is 1, 2, 3, or 4 and preferably is 2, 3, or 4. A is an anion and preferably is fluoride, hydroxide, silanolate, alkoxide, carbonate, or bicarbonate. An aminophosphazenium hydroxide is particularly preferred.

The potassium diorganosilanolate can be exemplified by potassium dimethylsilanolate. This potassium dimethylsilanolate has potassium bonded at both terminals of a dimethylsiloxane oligomer.

When the equilibration polymerization reaction is carried out in the presence of a strong acid catalyst, the reaction is carried out preferably at a temperature of 75°C to 120°C and most preferably at a temperature of 80°C to 90°C. When the equilibration polymerization reaction is carried out with a strong base catalyst, the reaction is carried out preferably at a temperature of 120°C to 160°C and most preferably at a temperature of 130°C to 150°C.

Once the polymerization has reached a state of equilibration, a suitable neutralizing agent is introduced in order to stop the polymerization reaction by neutralizing the equilibration polymerization catalyst. When the equilibration polymerization reaction is carried out in the presence of a strong acid catalyst, the neutralizing agent can be exemplified by calcium carbonate. When the equilibration polymerization reaction is carried out with a strong base catalyst, the neutralizing agent can be exemplified by bisdimethylsilylphosphonate.

Component (C) comprises the SiO_{4/2} unit; the R^{a}R^{b}₂SiO_{1/2} unit wherein R^{a} is an organic group selected from the group consisting of C₂ to C₆ alkenyl, C₂ to C₆ alkynyl, and C₁ to C₆ alkyl and R^{b} is an organic group selected from the group consisting of C₁ to C₆ alkyl, phenyl, C₁ to C₆ alkoxy, acryloxyalkyl, and methacryloxyalkyl; and the R₂SiO_{2/2} unit wherein R is a C₁ to C₈ alkyl group or phenyl group with the proviso that at least 50 mole % of R is the C₁ to C₈ alkyl group.

The R^{a}R^{b}₂SiO_{1/2} unit in component (C) can be exemplified by Vi(Me)₂SiO_{1/2} unit, He(Me)₂SiO_{1/2} unit, ViMePhSiO_{1/2} unit, (HO)(Me)₂SiO_{1/2} unit, and (MeO)(Me)₂SiO_{1/2} unit wherein Vi(Me)₂SiO_{1/2} unit and He(Me)₂SiO_{1/2} unit are preferred. The R₂SiO_{2/2} unit can be exemplified by (Me)₂SiO_{2/2} unit, MePhSiO_{2/2} unit, ViMeSiO_{2/2} unit, and MeHeSiO_{2/2} unit wherein the (Me)₂SiO_{2/2} unit is preferred. Here, Me denotes methyl; He denotes hexenyl; Vi denotes vinyl; and Ph denotes phenyl.

Because component (C) is produced by an equilibration polymerization that employs the previously described branched organosiloxane oligomer as a starting material, the number of SiO_{4/2} units in each molecule of component (C) is necessarily larger than 1 on average. Viewed from the perspective of the functional effect of reducing mist production during high-speed application of the solventless cured release coating-forming organopolysiloxane composition of the present invention to a sheet-form substrate, component (C) has more than one SiO_{4/2} unit on average in each molecule. The number of SiO_{4/2} units in each molecule of component (C) is preferably, for example, from 1.05 to 4 on average or is at least 2 on average and more preferably is 2 to 4 on average. The total number of R₂SiO_{2/2} units in each molecule of component (C) is preferably 1,000 to 5,000. The individual SiO_{4/2} units may be bonded to each other or may be bonded through some number of R₂SiO_{2/2} units. In a preferred embodiment, a diorganopolysiloxane chain comprising 120 to 500 or 250 to 1,250 R₂SiO_{2/2} units is bonded to each SiO_{4/2} unit and the R^{a}R^{b}₂SiO_{1/2} unit is bonded to the R₂SiO_{2/2} units at the ends of these diorganopolysiloxane chains. Or, the R^{a}R^{b}₂SiO_{1/2} unit and the silanol group are bonded to the R₂SiO_{2/2} units at the diorganopolysiloxane chain ends.

Again viewed from the perspective of the functional effect of reducing mist production during high-speed application of the solventless cured release coating-forming organopolysiloxane composition of the present invention to a sheet-form substrate, component (C) has an average degree of polymerization preferably of 1,000 to 6,000 and more preferably 2,000 to 4,000.

Again viewed from the perspective of the functional effect of reducing mist production during high-speed application of the solventless cured release coating-forming organopolysiloxane composition of the present invention to a sheet-form substrate, component (C) is a liquid at ambient temperature and has a viscosity at 25°C preferably of 10,000 to 1,250,000 mPa·s, more preferably 12,000 to 600,000 mPa·s, and most preferably 13,000 to 120,000 mPa·s. Component (C) may also be a gum with a viscosity at 25°C in excess of 1,250,000 mPa·s. It is this high viscosity as well as the production by equilibration polymerization using the aforementioned branched organosiloxane oligomer as a starting material that make this component (C) clearly different from the branched siloxane having a viscosity at 25°C of 50 to 10,000 mm²/s that is a characteristic component of the silicone-based release coating composition disclosed in JP 2001-064390 A (EP 1,070,734 B1). The viscosity of a liquid reported with the mm²/s unit can be converted to viscosity reported with the mPa·s unit by multiplying by the specific gravity of the liquid, and, since a branched organopolysiloxane such as component (C) has a specific gravity less than 1, 10,000 mm²/s is definitely smaller than 10,000 mPa·s.

A typical example of component (C) is a branched methylvinylpolysiloxane that comprises more than one SiO_{4/2} unit in each molecule, a total of 1,000 to 5,000 (CH₃)₂SiO_{2/2} units, and the CH₂=CH(CH₃)₂SiO_{1/2} unit located at the ends of (CH₃)₂SiO_{2/2} unit chains. The number of SiO_{4/2} units in each molecule is preferably 1.05 to 4 on average, more preferably 2 to 4 on average, and most preferably 3 or 4. The (CH₃)₂SiO_{2/2} unit chains preferably comprise an average of 120 to 500 or 250 to 1,250 (CH₃)₂SiO_{2/2} units. When more than two SiO_{4/2} units are present in each molecule, the SiO_{4/2} units may be bonded to each other to yield an oligomeric form, but the SiO_{4/2} units may also be bonded to each other through an interposed (CH₃)₂SiO_{2/2} unit chain. In a preferred embodiment, a (CH₃)₂SiO_{2/2} unit chain is preferably bonded to each SiO_{4/2} unit and the CH₂=CH(CH₃)₂SiO_{1/2} unit is bonded at each (CH₃)₂SiO_{2/2} unit chain end. Or, the CH₂=CH(CH₃)₂SiO_{1/2} unit and silanol group are bonded at the (CH₃)₂SiO_{2/2} unit chain ends.

A specific example of this component (C) is a branched methylvinylpolysiloxane that has four SiO_{4/2} units wherein the individual SiO_{4/2} units are connected by (CH₃)₂SiO_{2/2} unit chains having an average of 250 to 1250 (CH₃)₂SiO_{2/2} units, that has 1,000 to 5,000 (CH₃)₂SiO_{2/2} units overall, and that has the CH₂=CH(CH₃)₂SiO_{1/2} unit bonded at each (CH₃)₂SiO_{2/2} unit chain end.

The following chemical structural formula is an example of this component (C).

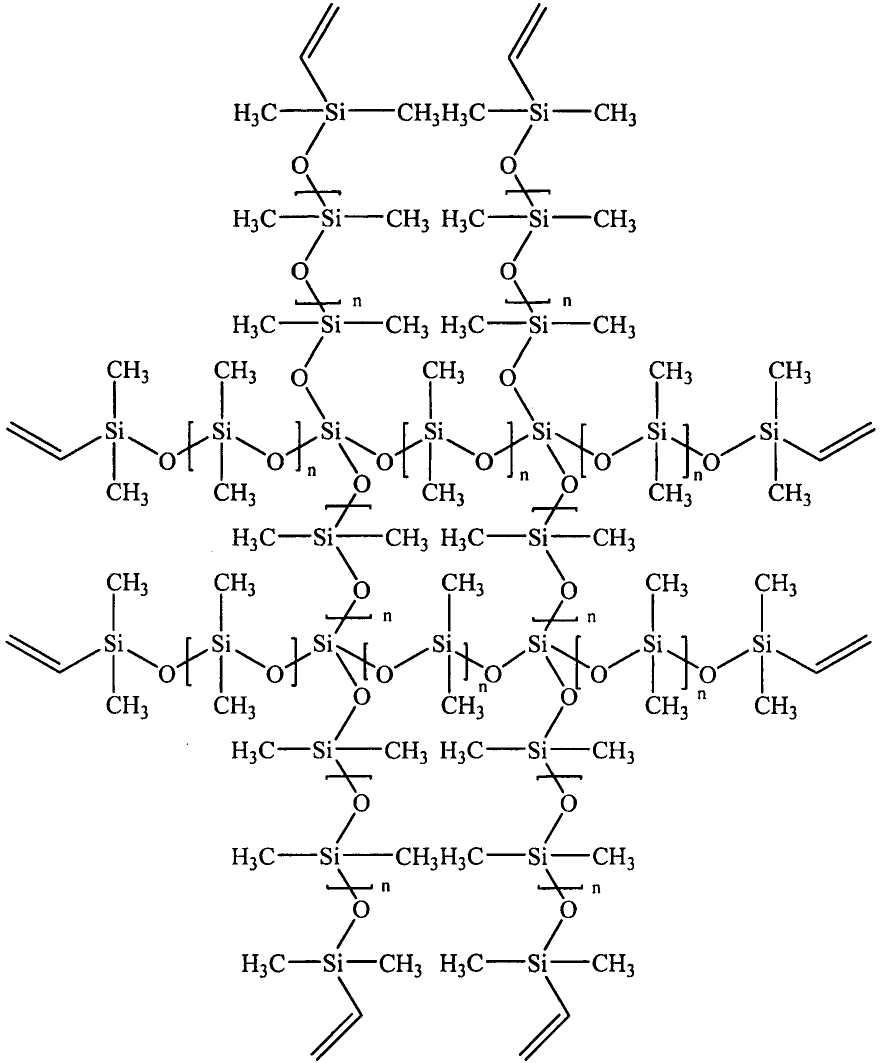

This component (C) is effective as an agent for suppressing or preventing silicone mist during the high-speed application on a sheet-form substrate of a solventless cured release coating-forming organopolysiloxane composition, particularly a solventless cured release coating-forming organopolysiloxane composition comprising the previously described components (A), (D), and (E), preferably (A), (B), (D), and (E), and particularly a solventless cured release coating-forming organopolysiloxane composition comprising (A) 100 weight parts of a diorganopolysiloxane that has a viscosity at 25°C of 25 to 1,000 mPa·s and that has at least two alkenyl groups in each molecule, (B) 0.5 to 15 weight parts of a diorganopolysiloxane that has a viscosity at 25°C of at least 10,000 mPa·s and that has an aliphatically unsaturated group content of no more than 0.1 mole % (including 0 mole %), (D) an organohydrogenpolysiloxane that has a viscosity at 25°C of 1 to 1,000 mPa·s and that has at least two silicon-bonded hydrogen atoms in each molecule, in an amount sufficient to provide a value of 0.8 : 1 to 5 : 1 for the molar ratio of silicon-bonded hydrogen atoms in this organohydrogenpolysiloxane to the quantity of alkenyl groups in component (A), and (E) a hydrosilylation reaction catalyst in a catalytic quantity. Component (C) is suitably incorporated at 0.5 to 5 weight parts per 100 weight parts of the liquid diorganopolysiloxane having at least two alkenyl groups in each molecule and particularly component (A).

Component (D), an organohydrogenpolysiloxane that has a viscosity at 25°C of 1 to 1,000 mPa · s and that has at least two silicon-bonded hydrogen atoms in each molecule, functions as a crosslinking agent for component (A). Crosslinking occurs through a hydrosilylation reaction between this silicon-bonded hydrogen atoms and the silicon-bonded alkenyl groups in component (A). When component (B) contains silicon-bonded alkenyl groups, this silicon-bonded hydrogen atoms also undergoes a hydrosilylation reaction with the silicon-bonded alkenyl groups in component (B). As a consequence, at least two silicon-bonded hydrogen atoms must be present in each molecule and preferably at least three silicon-bonded hydrogen atoms are present in each molecule.

The bonding position of the silicon-bonded hydrogen atoms is not particularly limited, and, for example, they may be bonded in molecular chain terminal position, side-chain position, or at both positions. The silicon-bonded hydrogen atom content is preferably 0.1 to 5 weight% and more preferably is 0.5 to 2.5 weight%.

The silicon-bonded organic groups are phenyl group or a C₁ to C₈ alkyl group wherein the C₁ to C₈ alkyl can be exemplified by methyl, ethyl, propyl, butyl, and octyl and preferably at least 50% of the total number of the organic groups in the molecule is the C₁ to C₈ alkyl group. The methyl group is preferred among these alkyl groups from the standpoint of the properties of the cured coating and the ease of production. The molecular structure of component (D) is exemplified by straight chain, branched chain, branched, and cyclic.

Component (D) has a viscosity at 25°C of 1 to 1,000 mPa · s and preferably 5 to 500 mPa · s. The reasons for this are as follows: when the viscosity at 25°C is less than 1 mPa · s, component (D) readily volatilizes out of the organopolysiloxane composition; the organopolysiloxane composition takes on long cure times at above 1,000 mPa · s.

This component (D) can be specifically exemplified by trimethylsiloxy-endblocked methylhydrogenpolysiloxanes, trimethylsiloxy-endblocked dimethylsiloxane · methylhydrogensiloxane copolymers, dimethylhydrogensiloxy-endblocked dimethylsiloxane · methylhydrogensiloxane copolymers, cyclic methylhydrogenpolysiloxanes, cyclic methylhydrogensiloxane · dimethylsiloxane copolymers, tris(dimethylhydrogensiloxy)methylsilane, tetra(dimethylhydrogensiloxy)silane, and the organohydrogenpolysiloxanes yielded by replacing a portion of the methyl in the preceding polysiloxanes and copolymers with a C₂ to C₈ alkyl group or phenyl group.

Component (D) is incorporated in an amount sufficient to provide a value of 0.8 : 1 to 5 : 1 for the molar ratio of silicon-bonded hydrogen atoms in component (D) to the alkenyl groups in component (A), or the alkenyl groups in components (A) and (B) when component (B) contains silicon-bonded alkenyl groups in the molecule, and preferably in an amount sufficient to provide a value of 0.9 : 1 to 3 : 1 for this molar ratio.
The curability is reduced when this molar ratio is less than the lower limited cited above, while a large peel resistance value occurs when the cited upper limit is exceeded and releasability is substantially not obtained.

Component (E) is a catalyst that promotes the hydrosilylation reaction between the silicon-bonded hydrogen atoms in component (D) and the silicon-bonded alkenyl groups in component (A) and functions to bring about crosslinking by a hydrosilylation reaction between components (A) and (C) and component (D). When component (B) contains one or more silicon-bonded alkenyl groups in each molecule, this catalyst also promotes the hydrosilylation reaction with the silicon-bonded alkenyl groups in component (B).

There are no particular limitations on this component (E) other than that it is Group 8 noble metal catalyst that promotes the hydrosilylation reaction. Component (E) can be specifically exemplified by platinum-based catalysts such as chloroplatinic acid, alcohol-modified chloroplatinic acid, chloroplatinic acid/olefin complexes, chloroplatinic acid/ketone complexes, platinum/alkenylsiloxane complexes, platinum tetrachloride, platinum micropowder, solid platinum supported on a support such as alumina or silica, platinum black, olefin complexes of platinum, carbonyl complexes of platinum, and a powdery thermoplastic organic resin, e.g., methyl methacrylate resin, polycarbonate resin, polystyrene resin, silicone resin, that incorporates a platinum-based catalyst as previously listed.

Other examples are rhodium catalysts such as [Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O₂), RhX₃[(R⁶)₂S]_{3,} (R⁷₃P)₂Rh(CO)X, (R⁷₃P)₂Rh(CO)H, Rh₂X₂Y₄, HₐRh_{b}(E)_{c}Cl_{d}, and Rh[O(CO)R]₃-ₙ(OH)ₙ wherein X is the hydrogen atom, chlorine atom, bromine atom, or iodine atom; Y is alkyl, CO, or C₈H₁₄; R⁶ is alkyl, cycloalkyl, or aryl; R⁷ is alkyl, aryl, alkyloxy, or aryloxy; E is an olefin; a is 0 or 1; b is 1 or 2; c is an integer from 1 to 4; d is 2, 3, or 4; and n is 0 or 1. Additional examples are iridium catalysts such as Ir(OOCCH₃)₃, Ir(C₅H₇O₂)₃, [Ir(Z)(E)₂]₂, and [Ir(Z)(Dien)]₂ wherein Z is the chlorine atom, bromine atom, iodine atom, or an alkoxy group; E is an olefin; and Dien is cyclooctadiene.

Viewed from the perspective of the ability to accelerate the hydrosilylation reaction, platinum-based catalysts are preferred wherein chloroplatinic acid, platinum/vinylsiloxane complexes, and olefin complexes of platinum are preferred, and the chloroplatinic acid/divinyltetramethyldisiloxane complex, chloroplatinic acid/tetramethyltetravinylcyclotetrasiloxane complex, and platinum/alkenylsiloxane complexes, e.g., the platinum divinyltetramethyldisiloxane complex, platinum/tetramethyltetravinylcyclotetrasiloxane complex are particularly preferred.

Component (E) is incorporated in a catalytic amount, and in general is incorporated at 1 to 1,000 ppm and preferably is incorporated at 5 to 500 ppm, in each case as the amount of platinum metal in component (E) with reference to the total weight of the solventless cured release coating-forming organopolysiloxane composition of the present invention.

In addition to the essential components described in the preceding, the cured release coating-forming organopolysiloxane composition of the present invention preferably also contains a hydrosilylation reaction inhibitor (F) in order to render it thermosetting while improving the storage stability by inhibiting gelation and curing at ambient temperature. This hydrosilylation reaction inhibitor can be exemplified by acetylenic compounds, ene-yne compounds, organonitrogen compounds, organophosphorus compounds, and oxime compounds and can be specifically exemplified by alkynyl alcohols such as 3-methyl-1-butyn-3-ol, 3,5-dimethyl-1-hexyn-3-ol, 3-methyl-1-pentyn-3-ol, phenylbutynol, 1-ethynyl-1-cyclohexanol, ene-yne compounds such as 3-methyl-3-penten-1-yne, 3,5-dimethyl-1-hexyn-3-ene; and by benzotriazole and methylvinylcyclosiloxanes. The amount of incorporation of this hydrosilylation reaction inhibitor is generally in the range of 0.001 to 5 weight parts and preferably in the range of 0.01 to 2 weight parts, in each case per 100 weight parts of component (A), and may be selected as appropriate in view of the type of hydrosilylation reaction inhibitor, the properties and amount of incorporation of the hydrosilylation reaction catalyst, the amount of alkenyl groups in component (A), and the amount of silicon-bonded hydrogen atoms in component (D).

The solventless cured release coating-forming organopolysiloxane composition of the present invention comprises components (A) through (E) or components (A) through (F), but an alkenyl-functional organopolysiloxane resin may also be incorporated in order to reduce, i.e., adjust, the cured coating's release force to tacky substances or for tacky substances. A thickener such as, for example, silica micropowder, may also be incorporated in order to boost the viscosity of the coating fluid. Known additives, such as a heat stabilizer, dye, pigment, and the like may also be incorporated as long as the objects and effects of the present invention are not impaired.

The cured release coating-forming organopolysiloxane composition of the present invention has a viscosity at 25°C in the range of 50 to 2,000 mPa·s and preferably in the range of 100 to 1,000 mPa·s based on a consideration of the composition's coatability on sheet-form substrates.

The cured release coating-forming organopolysiloxane composition of the present invention can be prepared by mixing the aforementioned components (A) to (E), or the aforementioned components (A) to (F), or these components and any other optional components, to homogeneity. The order of incorporation of the individual components is not particularly limited; however, when the composition will not be used immediately after mixing, a mixture of components (A), (B), (C), and (D) is preferably stored separately from component (E) and the two are preferably mixed just before use.

A cured coating that exhibits an excellent slipperiness and a suitable peel resistance value to tacky substances or for tacky substances can be formed on the surface of a sheet-form substrate, infra, by uniformly coating the cured release coating-forming organopolysiloxane composition of the present invention as described above on the surface of any of various sheet-form substrates, e.g., glassine paper, cardboard, clay-coated paper, polyolefin-laminated paper and particularly polyethylene-laminated paper, thermoplastic resin film (e.g., polyester film, polyethylene film, polypropylene film, polyamide film), natural fiber fabrics, synthetic fiber fabrics, metal foils (e.g., aluminum foil), and heating under conditions sufficient to cause components (A) and (D) to undergo crosslinking through the hydrosilylation reaction.

Generally 50 to 200°C is appropriate for the curing temperature for the cured release coating-forming organopolysiloxane composition of the present invention on a sheet-form substrate, but curing temperatures above 200°C can be used when the substrate possesses a good heat resistance. The method of heating is not particularly limited and can be exemplified by heating in a hot air circulation oven, passage through a long oven, or radiant heating using an infrared lamp or a halogen lamp. Curing can also be effected by using heating in combination with exposure to ultraviolet radiation. When component (D) is a platinum/alkenylsiloxane complex catalyst, even when this catalyst is incorporated at 50 to 200 ppm as the amount of platinum metal with reference to the total quantity of the composition, a cured coating that exhibits an excellent adherence to sheet-form substrates and excellent release properties to tacky substances or for tacky substances can be readily obtained in a brief period of time, i.e., 40 to 1 second, at 100 to 150°C.

There are no particular limitations on coaters used to apply the cured release coating-forming organopolysiloxane composition of the present invention on the surface of the sheet-form substrate; the coater can be exemplified by roll coaters, gravure coaters, air coaters, curtain flow coaters, and offset transfer roll coaters. With regard to the tacky substance that can be applied to the release sheet or film yielded by the application and curing of the cured release coating-forming organopolysiloxane composition of the present invention onto the surface of a sheet-form substrate, this tacky substance can be, for example, any of various pressure-sensitive adhesives and various adhesives, and examples thereof are acrylic resin-based pressure-sensitive adhesives, rubber-based pressure-sensitive adhesives, and silicone-based pressure-sensitive adhesives, as well as acrylic resin-based adhesives, synthetic rubber-based adhesives, silicone-based adhesives, epoxy resin-based adhesives, and polyurethane-based adhesives. Other examples are asphalt, sticky foods such as sticky rice cake, glues and pastes, and bird lime.

The cured release coating-forming organopolysiloxane composition of the present invention is useful for the formation of cured coatings that exhibit an excellent surface slipperiness and an excellent release performance to tacky substances or for tacky substances, and achieves this cured coating formation while producing little mist during application of the composition. The cured release coating-forming organopolysiloxane composition of the present invention is particularly well suited as a cured release coating-forming agent for process paper, asphalt packaging paper, and various plastic films. In addition, sheet-form substrates bearing a release coating formed by the cure of the cured release coating-forming organopolysiloxane composition of the present invention are well suited for use in particular for process paper, wrapping or packaging paper for tacky substances and sticky substances, pressure-sensitive adhesive tape, pressure-sensitive labels.

### Examples

Examples and comparative examples are given below in order to specifically describe the present invention; however, the present invention is not limited to the examples that follow. The methods described below were used in the synthesis example to measure and calculate the vinyl content, the hexenyl content, the SiO_{4/2} unit : Me₂ViSiO_{1/2} unit molar ratio, the SiO_{4/2} unit : Me₂SiO_{2/2} unit molar ratio, the number of SiO_{4/2} units in each molecule, and the number of Me₂SiO_{2/2} units in each molecule.
In the examples and comparative examples that follow, parts denotes weight parts in all instances and ppm denotes weight-ppm in all instances. The viscosity and plasticity were measured at 25°C by the methods described below. The method described below was used to measure the amount of mist production during high-speed application of the solventless cured release coating-forming organopolysiloxane compositions. In addition, the slipperiness and the release performance to tacky substances or for tacky substances of the cured coatings from the solventless cured release coating-forming organopolysiloxane compositions were evaluated by measurement at 25°C of, respectively, the dynamic coefficient of friction and the peel resistance value using the methods described below.

### [Vinyl content]

The vinyl content was determined by a well-known iodine titration method.

### [Weight-average molecular weight]

The weight-average molecular weight was determined by a well-known gel permeation chromatographic method.

A well-known ²⁹Si-NMR method was used to determine the SiO_{4/2} unit : Me₂ViSiO_{1/2} unit molar ratio, the SiO_{4/2} unit : Me₂SiO_{2/2} unit molar ratio, and the number of SiO_{4/2} units in each molecule.

### [Viscosity]

The viscosity was measured at 25°C using a digital display viscometer (Vismetron model VDA2 from Shibaura Systems Co., Ltd.) at a rotor rotation rate of 30 rpm with a #2 rotor installed.

### [Plasticity]

This was measured using a parallel-plate plasticity instrument in accordance with section 8 (Plasticity testing) of JIS K 6249:2003, "Test methods for uncured and cured silicone rubber".

### [Amount of silicone mist production during application of the organopolysiloxane composition to polyethylene-laminated paper]

A QCM Cascade Impactor (registered trademark, Model PC-2 Ten Stage QCM Cascade Impactor from California Measurements, Inc., of Sierra Madre, California), mist quantitation instrument, was installed on a forward roll coater having two rolls. The tip of the stainless steel tube (diameter = 0.635 cm, 1/4 inch) for silicone mist capture was placed at the nip region. The particular solventless cured release coating-forming organopolysiloxane composition was introduced to the nip region between the two rolls; the forward roll coater was started up; and the quantity of silicone mist was measured by suctioning the silicone mist produced at a line velocity of 457.2 m (1,500 ft)/minute for 30 seconds through the tube into the mist quantitation instrument at a suction speed of 3 L/minute. Three data points were acquired for a condition and their average is reported as the quantity of silicone mist.

### [Peel resistance value]

Using a printability tester (model RI-2, from Kabushiki Kaisha Akira Seisakusho), the particular solventless cured release coating-forming organopolysiloxane composition was coated, in a quantity providing 1.0 g/m² as siloxane, on the surface of polyethylene-laminated paper or glassine paper; this was followed by heating for 30 seconds at 120°C in a hot air circulation oven to form a cured coating. A solvent-based acrylic pressure-sensitive adhesive (trade name: Oribain BPS-5127, from Toyo Ink Mfg. Co., Ltd.) was uniformly coated at 30 g/m² as solids on this cured coating surface using an applicator and heating was carried out for 2 minutes at 70°C. A premium-grade paper (areal weight = 64 g/m²) was then pasted on this acrylic pressure-sensitive adhesive surface, and the resulting paper laminate was cut to a width of 5 cm to yield the sample. This sample was held for 20 hours in the air at a humidity of 60% and a temperature of 25°C. Then, using a tensile tester, the premium-grade paper and polyethylene-laminated paper or glassine paper of the sample were pulled in opposite directions at a 180° angle at a peeling rate of 0.3 m/minute and the force (N) required for peeling was measured. A sample was then fabricated by cutting a paper laminate obtained as described above to a width of 2.5 cm and was submitted to measurement of the force (N) required for peeling under the conditions cited above, with the exception that the peeling rate was 100 m/min.

### [Dynamic coefficient of friction]

Two cured coatings were formed using the same conditions as cited above for measurement of the peel resistance value. These cured coatings were then overlaid in such a manner that the cured coating sides were in contact with each other; this was followed by pulling using a high-speed peel tester using conditions of load = 200 g and pulling rate = 5 m/min and the force (g) required for pulling was measured. The force (g) required for pulling/200 (g) was designated as the dynamic coefficient of friction of the cured coating.

### [Residual adhesiveness]

Lumilar 31 B polyester tape (from Nitto Denko Corporation, Lumilar is a trade mark) was adhered on the surface of the cured coating of the sample followed by ageing for 20 hours at 70°C with a load of 20 g/cm² applied. The tape was thereafter peeled off and pasted on a stainless steel coupon. This tape was then pulled off from the surface of the stainless steel coupon at an angle of 180° at a peel rate of 300 mm/minute and the force (g) required for peeling was measured.

In addition, Lumilar 31B polyester tape (from Nitto Denko Corporation, Lumilar is a trade mark) was similarly pasted on a polytetrafluoroethylene sheet followed by ageing for 20 hours at 70°C with a load of 20 g/cm² applied. The tape was thereafter peeled off and pasted on a stainless steel coupon. This tape was then pulled off from the surface of the stainless steel coupon at an angle of 180° at a peel rate of 300 mm/minute and the force (g) required for peeling was measured. The force required when the tape had been pasted on the surface of the cured coating was expressed as a percentage using the value for pasting on the polytetrafluoroethylene sheet as 100, and this percentage was designated as the residual adhesiveness.

### Synthesis Example

### Synthesis of component (C) (mist suppressant)

208.33 g (1.00 mole) tetraethoxysilane, 186.40 g (1.00 mole) 1,1,3,3-divinyltetramethyldisiloxane, 0.08 g (0.0005 mole) trifluoromethanesulfonic acid, and 36.93 g (2.05 mole) water were placed in a glass flask and stirring was carried out at room temperature until ethanol production ceased. The volatiles were removed by stripping under reduced pressure and washing with water was performed to neutrality. Analysis of the remaining colorless and transparent liquid showed it to be a branched methylvinylsiloxane oligomer with the average siloxane unit formula (SiO_{4/2})(Me₂ViSiO_{1/2})ₓ wherein x = 1.

2.7 g (0.0176 mole) of this branched methylvinylsiloxane oligomer, 297.3 g (0.804 mole) decamethylcyclopentasiloxane, and 0.06 g potassium dimethylsilanolate catalyst (potassium equivalent weight: 10,000) were introduced into a glass flask and stirred at 25°C. 0.005 g trimethylamine hydroxide phosphazene catalyst was added and stirring was carried out at 25°C to achieve uniformity. The temperature was then raised and stirring was continued at 140°C to 150°C. When the viscosity of the contents had become constant, trimethylsilyl phosphate was introduced to neutralize the phosphazene catalyst. Cooling to room temperature while stirring yielded a colorless and transparent liquid with a viscosity at 25°C of 15,240 mPa·s. Analysis of this liquid showed it to be a branched methylvinylpolysiloxane having a vinyl content of 0.197 weight%. Its SiO_{4/2} unit : Me₂SiO_{2/2} unit was 1 : 367 and it had more than one SiO_{4/2} units in each molecule.

### Example 1

The following were mixed to uniformity in a mixer: 50 parts of a dimethylvinylsiloxy-endblocked straight-chain dimethylsiloxane · methylvinylsiloxane copolymer having a vinyl content of 5.4 weight% and a viscosity of 60 mPa·s, 36.2 parts of a dimethylhexenylsiloxy-endblocked straight-chain dimethylsiloxane · methylhexenylsiloxane copolymer having a hexenyl content of 1.1 weight% and a viscosity of 200 mPa·s, 2.5 parts of a dimethylvinylsiloxy-endblocked straight-chain dimethylpolysiloxane gum having a plasticity of 140, 1.0 part of the branched methylvinylpolysiloxane synthesized in Synthesis Example, 10 parts of a trimethylsiloxy-endblocked methylhydrogenpolysiloxane having a viscosity of 25 mPa·s and a silicon-bonded hydrogen atom content of 1.6 weight%, and 0.30 part 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating from the composition. These results are reported in Table 1.

### Example 2

The following were mixed to uniformity in a mixer: 50 parts of a dimethylvinylsiloxy-endblocked straight-chain dimethylsiloxane · methylvinylsiloxane copolymer having a vinyl content of 5.4 weight% and a viscosity of 60 mPa·s, 34.2 parts of a dimethylhexenylsiloxy-endblocked straight-chain dimethylsiloxane · methylhexenylsiloxane copolymer having a hexenyl content of 1.1 weight% and a viscosity of 200 mPa·s, 2.5 parts of a dimethylvinylsiloxy-endblocked straight-chain dimethylpolysiloxane gum having a plasticity of 140, 3.0 parts of the branched methylvinylpolysiloxane synthesized in Synthesis Example, 10 parts of a trimethylsiloxy-endblocked methylhydrogenpolysiloxane having a viscosity of 25 mPa·s and a silicon-bonded hydrogen atom content of 1.6 weight%, and 0.30 part 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating from the composition. These results are reported in Table 1.

### Example 3

The following were mixed to uniformity in a mixer: 50 parts of a dimethylvinylsiloxy-endblocked straight-chain dimethylsiloxane · methylvinylsiloxane copolymer having a vinyl content of 5.4 weight% and a viscosity of 60 mPa·s, 34.2 parts of a dimethylhexenylsiloxy-endblocked straight-chain dimethylsiloxane · methylhexenylsiloxane copolymer having a hexenyl content of 1.1 weight% and a viscosity of 200 mPa·s, 2.5 parts of a silanol-endblocked straight-chain dimethylpolysiloxane gum having a plasticity of 140, 3.0 parts of the branched methylvinylpolysiloxane synthesized in Synthesis Example, 10 parts of a trimethylsiloxy-endblocked methylhydrogenpolysiloxane having a viscosity of 25 mPa·s and a silicon-bonded hydrogen atom content of 1.6 weight%, and 0.30 part of 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating from the composition. These results are reported in Table 1.

### Example 4

The following were mixed to uniformity in a mixer: 95.7 parts of a dimethylhexenylsiloxy-endblocked straight-chain dimethylsiloxane · methylhexenylsiloxane copolymer having a hexenyl content of 1.1 weight% and a viscosity of 200 mPa·s, 2.0 parts of a trimethylsiloxy-endblocked straight-chain dimethylpolysiloxane having a viscosity of 100,000 mPa·s, 1.0 part of the branched methylvinylpolysiloxane synthesized in Synthesis Example, 3.0 parts of a trimethylsiloxy-endblocked methylhydrogenpolysiloxane having a viscosity of 25 mPa·s and a silicon-bonded hydrogen atom content of 1.6 weight%, and 0.30 part 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating from the composition. These results are reported in Table 1.

### Comparative Example 1

The following were mixed to uniformity in a mixer: 50 parts of a dimethylvinylsiloxy-endblocked straight-chain dimethylsiloxane · methylvinylsiloxane copolymer having a vinyl content of 5.4 weight% and a viscosity of 60 mPa·s, 36.2 parts of a dimethylhexenylsiloxy-endblocked straight-chain dimethylsiloxane · methylhexenylsiloxane copolymer having a hexenyl content of 1.1 weight% and a viscosity of 200 mPa·s, 2.5 parts of a dimethylvinylsiloxy-endblocked dimethylpolysiloxane gum having a plasticity of 140, 10 parts of a trimethylsiloxy-endblocked methylhydrogenpolysiloxane having a viscosity of 25 mPa·s and a silicon-bonded hydrogen atom content of 1.6 weight%, and 0.30 part 1-ethyny-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating produced by curing the obtained organopolysiloxane composition. These results are reported in Table 1.

### Comparative Example 2

The following were mixed to uniformity: 50 parts of a dimethylvinylsiloxy-endblocked straight-chain dimethylsiloxane · methylvinylsiloxane copolymer having a vinyl content of 5.4 weight% and a viscosity of 60 mPa·s, 34.2 parts of a dimethylhexenylsiloxy-endblocked straight-chain dimethylsiloxane · methylhexenylsiloxane copolymer having a hexenyl content of 1.1 weight% and a viscosity of 200 mPa·s, 2.5 parts of a silanol-endblocked dimethylpolysiloxane gum having a plasticity of 140, 10 parts of a trimethylsiloxy-endblocked methylhydrogenpolysiloxane having a viscosity of 25 mPa·s and a silicon-bonded hydrogen atom content of 1.6 weight%, and 0.30 part 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating produced by curing the obtained organopolysiloxane composition. These results are reported in Table 1.

### Comparative Example 3

The following were mixed to uniformity: 95.7 parts of a dimethylhexenylsiloxy-endblocked straight-chain dimethylsiloxane · methylhexenylsiloxane copolymer having a hexenyl content of 1.1 weight% and a viscosity of 200 mPa·s, 2.0 parts of a trimethylsiloxy-endblocked dimethylpolysiloxane having a viscosity of 100,000 mPa·s, 3 parts of a trimethylsiloxy-endblocked methylhydrogenpolysiloxane having a viscosity of 25 mPa·s and a silicon-bonded hydrogen atom content of 1.6 weight%, and 0.30 part 1-ethyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. Rather than measuring the amount of mist produced during application of the obtained organopolysiloxane composition to polyethylene-laminated paper, the status of mist production in the neighborhood of the nip region was visually inspected. As a result, mist production in this case was found to be clearly larger than for the organopolysiloxane composition of Example 1. The dynamic coefficient of friction, the peel resistance value and the residual adhesiveness were measured on the cured coating produced by coating the obtained organopolysiloxane composition on polyethylene-laminated paper and curing. These results are reported in Table 1.

### Comparative Example 4

The following were mixed to uniformity: 50 parts of a dimethylvinylsiloxy-endblocked straight-chain dimethylsiloxane · methylvinylsiloxane copolymer having a vinyl content of 5.4 weight% and a viscosity of 60 mPa·s, 39.7 parts of a dimethylhexenylsiloxy-endblocked straight-chain dimethylsiloxane · methylhexenylsiloxane copolymer having a hexenyl content of 1.1 weight% and a viscosity of 200 mPa·s, 3 parts of the branched methylvinylpolysiloxane synthesized in Synthesis Example 1, 10 parts of a trimethylsiloxy-endblocked methylhydrogenpolysiloxane having a viscosity of 25 mPa·s and a silicon-bonded hydrogen atom content of 1.6 weight%, and 0.30 part of 1-ethynyl-1-cyclohexanol. The solventless cured release coating-forming organopolysiloxane composition with the viscosity reported in Table 1 was then obtained by the addition to the resulting mixture with mixing of a chloroplatinic/1,3-divinyl-1,1,3,3-tetramethyldisiloxane complex that had a platinum metal content of 0.60 weight%, this complex being added in an amount sufficient to provide 100 ppm platinum metal. The amount of mist produced during application of the obtained organopolysiloxane composition to polyethylene-laminated paper was measured. And, the dynamic coefficient of friction, the peel resistance value and the residual adhesiveness were measured on the cured coating produced by curing the obtained organopolysiloxane composition. These results are reported in Table 1.

**Table 1**

| | viscosity | amount of mist | dynamic coefficient of friction | peel resistance | residual adhesiveness |
|---|---|---|---|---|---|
| | (mPa·s) | (mg/m³) | | (N/5 cm) | (%) |
| Example 1 | 290 | 56 | 0.180 | 350 | 96 |
| Example 2 | 310 | 49 | 0.178 | 330 | 95 |
| Example 3 | 310 | 47 | 0.173 | 320 | 95 |
| Example 4 | 300 | 49 | 0.300 | 150 | 97 |
| Comparative Example 1 | 280 | 83 | 0.182 | 350 | 96 |
| Comparative Example 2 | 280 | 83 | 0.180 | 340 | 96 |
| Comparative Example 3 | 270 | --- | 0.315 | 150 | 97 |
| Comparative Example 4 | 150 | 35 | 0.452 | 600 | 98 |

### Industrial Applicability

The cured release coating-forming organopolysiloxane composition of the present invention is useful for high-speed application to the surface of a sheet-form substrate and is also useful for forming, on the surface of a sheet-form substrate, a cured coating that exhibits an excellent slipperiness as well as a suitable peeling resistance to tacky substances.
Sheet-form substrates that have a release coating provided by the cure of the cured release coating-forming organopolysiloxane composition of the present invention are useful as process paper and as paper for packaging or wrapping tacky substances and are also useful for the production of pressure-sensitive adhesive tape and pressure-sensitive adhesive labels.

## Claims

1. A solventless cured release coating-forming organopolysiloxane composition having a viscosity at 25°C of 50 to 2,000 mPa**·**s comprising
(A) 100 weight parts of a diorganopolysiloxane that has a viscosity at 25°C of 25 to 1,000 mPa·s and that has at least two alkenyl groups in each molecule;
(B) 0.5 to 15 weight parts of a diorganopolysiloxane that has a viscosity at 25°C of at least 10,000 mPa**·**s and that has an aliphatically unsaturated group content of no more than 0.1 mole % (including 0 mole %);
(C) 0.5 to 5 weight parts of a branched organopolysiloxane that has more than one SiO_{4/2} unit in the molecule, that has a viscosity at 25°C of at least 10,000 mPa·s, and that is a polymer product provided by an equilibration polymerization between
a branched organosiloxane oligomer represented by the average siloxane unit formula (1)
(SiO_{4/2})(R^{a}R^{b}₂SiO_{1/2})ₓ (1)
wherein R^{a} is an organic group selected from the group consisting of C₂ to C ₆ alkenyl, C₂ to C ₆ alkynyl, and C₁ to C ₆ alkyl, R^{b} is an organic group selected from the group consisting of C₁ to C ₆ alkyl, phenyl, C₁ to C ₆ alkoxy, acryloxyalkyl, and
methacryloxyalkyl, and x is a number with an average value of 0.9 to 3, and
a diorganosiloxane oligomer comprising the diorganosiloxane unit represented by the formula R₂SiO_{2/2} wherein R is a C₁ to C₈ alkyl group or phenyl group and at least 50 mole % of R is the C₁ to C ₈ alkyl group;
(D) an organohydrogenpolysilaxane that has a viscosity at 25°C of 1 to 1,000 mPa·s and that has at least two silicon-bonded hydrogen atoms in each molecule, in an amount sufficient to provide a value of 0.8 : 1 to 5 : 1 for the molar ratio of silicon-bonded hydrogen atoms in this organohydrogenpolysiloxane to the total quantity of aliphatically unsaturated groups in components (A), (B), and (C); and
(E) a hydrosilylation reaction catalyst in a catalytic quantity.

2. The solventless cured release coating-forming organopolysiloxane composition according to claim 1, **characterized in that** component (C) is a polymer product provided by an equilibration polymerization of the aforementioned branched organosiloxane oligomer and the aforementioned diorganosiloxane oligomer in the presence of a phosphazene base catalyst or in the presence of a phosphazene base catalyst and a potassium silanolate catalyst.

3. The solventless cured release coating-forming organopolysiloxane composition according to claim 1 or 2, **characterized in that** the molar ratio between the aforementioned branched organosiloxane oligomer and the aforementioned diorganosiloxane oligomer is a ratio that provides a molar ratio between the SiO_{4/2} unit and the R₂SiO_{2/2} unit of 1 : 100 to 1 : 1250.

4. The solventless cured release coating-forming organopolysiloxane composition according to any of claims 1 to 3, **characterized in that** component (C) contains an average of at least two SiO_{4/2} units in each molecule.

5. The solventless cured release coating-forming organopolysiloxane composition according to any of claims 1 to 4, **characterized in that** component (C) is a gum or a liquid having a viscosity at 25°C of 10,000 to 1,250,000 mPa·s.

6. The solventless cured release coating-forming organopolysiloxane composition according to any of claims 1 to 5, **characterized in that** component (A) is represented by the average structural formula (2)
R^{c}R₂SiO(RR^{c}SiO_{2/2})ₘ₁(R₂SiO_{2/2})ₘ₂SiR₂R^{c} (2)
wherein R is a C₁ to C₈ alkyl group or phenyl group with the proviso that at least 50 mole % of R in the molecule is the C₁ to C ₈ alkyl group, R^{c} is a C₂ to C ₈ alkenyl group, **m1** is a number greater than or equal to zero, **m2** is a number greater than or equal to 1, and **m1** + **m2** is a number that provides this component with a viscosity at 25°C of 50 to 1,000 mPa·s;
component (B) is represented average structural formula (3)
R^{d}R₂SiO(RR^{c}SiO_{2/2})ₙ₁(R₂SiO_{2/2})ₙ₂SiR₂R^{d} (3)
wherein R is a C₁ to C ₈ alkyl group or phenyl group with the proviso that at least 50 mole % of R is the C₁ to C ₈ alkyl group, R^{c} is a C₂ to C ₈ alkenyl group, R^{d} is a group selected from the group consisting of C₁ to C ₈ alkyl, C₂ to C ₈ alkenyl, phenyl, C₁ to C ₈ alkoxy, and hydroxyl group, 0 to 0.1% of the sum total of the R, R^{c}, and R^{d} in the molecule is the C₂ to C ₈ alkenyl group, at least 50% of the sum total of the R, R^{c}, and R^{d} in the molecule is a C₁ to C ₈ alkyl group, **n1** is a number greater than or equal to zero, **n2** is a number greater than or equal to 1, and **n1** + **n2** is a number that provides this component with a viscosity at 25°C of at least 10,000 mPa·s;
component (C) comprises the SiO_{4/2} unit, the R^{a}R^{b}₂SiO_{1/2} unit wherein R^{a} is an organic group selected from the group consisting of C₂ to C ₆ alkenyl, C₂ to C ₆ alkynyl, and C₁ to C ₆ alkyl, and R^{b} is an organic group selected from the group consisting of C₁ to C ₆ alkyl, phenyl, C₁ to C ₆ alkoxy, acryloxyalkyl, and methacryloxyalkyl, and the R₂SiO_{2/2} unit wherein R is a C ₁ to C ₈ alkyl group or phenyl group with the proviso that at least 50 mole % of R is the C₁ to C ₈ alkyl group; and
the silicon-bonded organic groups in component (D) are a C₁ to C ₈ alkyl group or phenyl group wherein at least 50 mole % thereof in the molecule is the C₁ to C ₈ alkyl group.

7. The solventless cured release coating-forming organopolysiloxane composition according to claim 6, **characterized in that** R in component (A) is methyl group; R^{c} in component (A) is vinyl group or hexenyl group; R in component (B) is methyl group; R^{c} in component (B) is vinyl group or hexenyl group; R^{d} in component (B) is a group selected from the group consisting of methyl group, vinyl group, phenyl group, and hydroxyl group; R^{a} in component (C) is vinyl group; R^{b} in component (C) is methyl group; R in component (C) is methyl group; and the silicon-bonded organic groups in component (D) are methyl group.

8. A sheet-form substrate **characterized in that** a cured release coating from the solventless cured release coating-forming organopolysiloxane composition according to any of claims 1 to 5 is present on a surface of the sheet-form substrate.

9. A sheet-form substrate **characterized in that** a cured release coating from the solventless cured release coating-forming organopolysiloxane composition according to claim 6 or 7 is present on a surface of the sheet-form substrate.

10. The cured release coating-bearing sheet-form substrate according to claim 8 or 9, **characterized in that** the sheet-form substrate is paper, polyolefin-laminated paper, thermoplastic resin film, or metal foil.

## Patentansprüche

1. Lösungsmittelfreie, eine gehärtete Trennbeschichtung bildende Organopolysiloxanzusammensetzung mit einer Viskosität bei 25°C von 50 bis 2.000 mPa·s enthaltend:
(A) 100 Gewichtsteile eines Diorganopolysiloxans, das eine Viskosität bei 25°C von 25 bis 1.000 mPa·s aufweist und mindestens zwei Alkenylgruppen in jedem Molekül aufweist,
(B) 0,5 bis 15 Gewichtsteile eines Diorganopolysiloxans, das eine Viskosität bei 25°C von mindestens 10.000 mPa·s aufweist und das einen Gehalt an aliphatisch ungesättigten Gruppen von nicht mehr als 0,1 mol-% (einschließlich 0 mol-%) aufweist,
(C) 0,5 bis 5 Gewichtsteile eines verzweigten Organopolysiloxans, das mehr als eine SiO_{4/2}-Einheit im Molekül aufweist, das eine Viskosität bei 25°C von mindestens 10.000 mPa·s aufweist und ein Polymerprodukt ist, das durch eine Gleichgewichtspolymerisation zwischen
einem verzweigten Organosiloxanoligomer, das durch die mittlere Siloxaneinheitenformel (1) wiedergegeben ist:
(SiO_{4/2})(R^{a}R^{b}₂SiO_{1/2})ₓ (1),
worin R^{a} eine organische Gruppe ist, die ausgewählt ist aus der Gruppe bestehend aus C₂- bis C₆-Alkenyl, C₂- bis C₆-Alkinyl und C₁- bis C₆-Alkyl, R^{b} eine organische Gruppe ist, die ausgewählt ist aus der Gruppe bestehend aus C₁- bis C₆-Alkyl, Phenyl, C₁- bis C₆-Alkoxy, Acryloxyalkyl und Methacryloxyalkyl, und x eine Zahl mit einem Mittelwert von 0,9 bis 3 ist, und
einem Diorganosiloxanoligomer, das Diorganosiloxaneinheiten enthält, die durch die Formel R₂SiO_{2/2} wiedergegeben sind, worin R eine C₁- bis C₈-Alkylgruppe oder Phenylgruppe ist und wenigstens 50 mol-% von R die C₁- bis C₈-Alkylgruppe sind,
bereitgestellt wird,
(D) ein Organowasserstoffpolysiloxan, das eine Viskosität bei 25°C von 1 bis 1.000 mPa·s aufweist und das wenigstens zwei siliciumgebundene Wasserstoffatome in jedem Molekül aufweist, in einer Menge, die ausreicht, um einen Wert von 0,8:1 bis 5:1 für das molare Verhältnis von siliciumgebundenen Wasserstoffatomen in diesem Organowasserstoffpolysiloxan zu der Gesamtmenge an aliphatisch ungesättigten Gruppen in den Komponenten (A), (B) und (C) bereitzustellen, und
(E) einen Hydrosilylierungsreaktionskatalysator in einer katalytischen Menge.

2. Lösungsmittelfreie, eine gehärtete Trennbeschichtung bildende Organopolysiloxanzusammensetzung gemäß Anspruch 1, **dadurch gekennzeichnet, dass** Komponente (C) ein Polymerprodukt ist, das durch eine Gleichgewichtspolymerisation des zuvor erwähnten verzweigten Organosiloxanoligomers und des zuvor erwähnten Diorganosiloxanoligomers in Gegenwart eines Phosphazenbasenkatalysators oder in Gegenwart eines Phosphazenbasenkatalysators und eines Kaliumsilanolatkatalysators bereitgestellt wird.

3. Lösungsmittelfreie, eine gehärtete Trennbeschichtung bildende Organopolysiloxanzusammensetzung gemäß Anspruch 1 oder 2, **dadurch gekennzeichnet, dass** das molare Verhältnis zwischen dem zuvor erwähnten verzweigten Organosiloxanoligomer und dem zuvor erwähnten Diorganosiloxanoligomer ein Verhältnis ist, das ein molares Verhältnis zwischen SiO_{4/2}-Einheiten und den R₂SiO_{2/2}-Einheiten von 1:100 bis 1:1.250 bereitstellt.

4. Lösungsmittelfreie, eine gehärtete Trennbeschichtung bildende Organopolysiloxanzusammensetzung gemäß einem der Ansprüche 1-3, **dadurch gekennzeichnet, dass** Komponente (C) im Mittel wenigstens zwei SiO_{4/2}-Einheiten in jedem Molekül enthält.

5. Lösungsmittelfreie, eine gehärtete Trennbeschichtung bildende Organopolysiloxanzusammensetzung gemäß einem der Ansprüche 1-4, **dadurch gekennzeichnet, dass** Komponente (C) ein Harz oder eine Flüssigkeit mit einer Viskosität bei 25°C von 10.000 bis 1.250.000 mPa·s ist.

6. Lösungsmittelfreie, eine gehärtete Trennbeschichtung bildende Organopolysiloxanzusammensetzung gemäß einem der Ansprüche 1-5, **dadurch gekennzeichnet, dass** Komponente (A) durch die mittlere Strukturformel (2) wiedergegeben ist:
R^{c}R₂SiO(RR^{c}SiO_{2/2})ₘ₁(R₂SiO_{2/2})ₘ₂SiR₂R^{c} (2),
worin R eine C₁- bis C₈-Alkylgruppe oder Phenylgruppe ist, unter der Voraussetzung, das wenigstens 50 mol-% von R in dem Molekül die C₁- bis C₈-Alkylgruppe sind, R^{c} eine C₂- bis C₈-Alkenylgruppe ist, **m1** eine Zahl größer oder gleich 0 ist, **m2** eine Zahl größer oder gleich 1 ist und **m1** + **m2** eine Zahl ist, die der Komponente eine Viskosität bei 25°C von 50 bis 1.000 mPa·s verleiht,
Komponente (B) durch die mittlere Strukturformel (3) wiedergegeben ist:
R^{d}R₂SiO(RR^{c}SiO_{2/2})ₙ₁(R₂SiO_{2/2})ₙ₂SiR₂R^{d} (3),
worin R eine C₁- bis C₈-Alkylgruppe oder Phenylgruppe ist, unter der Voraussetzung, dass wenigstens 50 mol-% von R die C₁- bis C₈-Alkylgruppe sind, R^{c} eine C₂- bis C₈-Alkenylgruppe ist, R^{d} eine Gruppe ist, die ausgewählt ist aus der Gruppe bestehend aus C₁- bis C₈-Alkyl, C₂- bis C₈-Alkenyl, Phenyl, C₁- bis C₈-Alkoxy und einer Hydroxylgruppe, 0 bis 0,1% der Gesamtsumme von R, R^{c} und R^{d} in dem Molekül die C₂- bis C₈-Alkenylgruppe sind, wenigstens 50% der Gesamtsumme von R, R^{c} und R^{d} in dem Molekül eine C₁- bis C₈-Alkylgruppe sind, **n1** eine Zahl größer oder gleich 0 ist, **n2** eine Zahl größer oder gleich 1 ist und **n1** + **n2** eine Zahl ist, die der Komponente eine Viskosität bei 25°C von mindestens 10.000 mPa·s verleiht,
Komponente (C) die SiO_{4/2}-Einheit, die R^{a}R^{b}₂SiO_{1/2}-Einheit, worin R^{a} eine organische Gruppe ist, die ausgewählt ist aus der Gruppe bestehend aus C₂- bis C₆-Alkenyl, C₂- bis C₆-Alkinyl und C₁- bis C₆-Alkyl, und R^{b} eine organische Gruppe ist, die ausgewählt ist aus der Gruppe bestehend aus C₁- bis C₆-Alkyl, Phenyl, C₁- bis C₆-Alkoxy, Acryloxyalkyl und Methacryloxyalkyl, und die R₂SiO_{2/2}-Einheit enthält, worin R eine C₁- bis C₈-Alkylgruppe oder Phenylgruppe ist, unter der Voraussetzung, dass wenigstens 50 mol-% von R die C₁- bis C₈-Alkylgruppe sind, und die siliciumgebundenen organischen Gruppen in Komponente (D) eine C₁-bis C₈-Alkylgruppe oder Phenylgruppe sind, wobei wenigstens 50 mol-% davon in dem Molekül die C₁- bis C₈-Alkylgruppe sind.

7. Lösungsmittelfreie, eine gehärtete Trennbeschichtung bildende Organopolysiloxanzusammensetzung gemäß Anspruch 6, **dadurch gekennzeichnet, dass** R in Komponente (A) die Methylgruppe ist, R^{c} in Komponente (A) die Vinyl- oder Hexenylgruppe ist, R in Komponente (B) die Methylgruppe ist, R^{c} in Komponente (B) die Vinyl- oder Hexenylgruppe ist, R^{d} in Komponente (B) eine Gruppe ist, die ausgewählt ist aus der Gruppe bestehend aus der Methylgruppe, der Vinylgruppe, der Phenylgruppe und der Hydroxylgruppe, R^{a} in Komponente (C) die Vinylgruppe ist, R^{b} in Komponente (C) die Methylgruppe ist, R in Komponente (C) die Methylgruppe ist und die siliciumgebundenen organischen Gruppen in Komponente (D) Methylgruppen sind.

8. Substrat in Blattform, **dadurch gekennzeichnet, dass** eine gehärtete Trennbeschichtung aus der lösungsmittelfreien, eine gehärtete Trennbeschichtung bildenden Organopolysiloxanzusammensetzung gemäß einem der Ansprüche 1-5 auf einer Oberfläche des blattförmigen Substrats vorhanden ist.

9. Substrat in Blattform, **dadurch gekennzeichnet, dass** eine gehärtete Trennbeschichtung aus der lösungsmittelfreien, eine gehärtete Trennbeschichtung bildenden Organopolysiloxanzusammensetzung gemäß der Ansprüche 6 oder 7 auf einer Oberfläche des blattförmigen Substrats vorhanden ist.

10. Gehärtetes, eine Trennbeschichtung tragendes blattförmiges Substrat gemäß der Ansprüche 8 oder 9, **dadurch gekennzeichnet, dass** das blattförmige Substrat Papier, mit Polyolefin laminiertes Papier, ein thermoplastischer Harzfilm oder eine Metallfolie ist.

## Revendications

1. Composition d'organopolysiloxane formant un revêtement de séparation durci sans solvant ayant une viscosité à 25°C de 50 à 2 000 mPa.s comprenant
(A) 100 parties en poids d'un diorganopolysiloxane qui a une viscosité à 25°C de 25 à 1 000 mPa.s et qui a au moins deux groupes alcényle dans chaque molécule ;
(B) 0,5 à 15 parties en poids d'un diorganopolysiloxane qui a une viscosité à 25°C d'au moins 10 000 mPa.s et qui a une teneur en groupes aliphatiquement insaturés ne dépassant pas 0,1 mol% (incluant 0 mol%) ;
(C) 0,5 à 5 parties en poids d'un organopolysiloxane ramifié qui a plus d'une unité SiO_{4/2} dans la molécule, qui a une viscosité à 25°C d'au moins 10 000 mPa.s, et qui est un produit polymère formé par une polymérisation à l'équilibre entre un oligomère d'organopolysiloxane ramifié représenté par la formule d'unité siloxane moyenne (1)
(SiO_{4/2})(R^{a}R^{b}₂SiO_{1/2})ₓ (1)
où R^{a} est un groupe organique choisi dans le groupe consistant en C₂ à C₆ alcényle, C₂ à C₆ alcynyle et C₁ à C₆ alkyle, R^{b} est un groupe organique choisi dans le groupe consistant en C₁ à C₆ alkyle, phényle C₁ à C₆ alcoxy, acryloxyalkyle et méthacryloxyalkyle, et x est un nombre ayant une valeur moyenne de 0,9 à 3, et
un oligomère de diorganosiloxane comprenant l'unité de diorganosiloxane représentée par la formule R₂SiO_{2/2} où R est un groupe C₁ à C₈ alkyle ou un groupe phényle et au moins 50 mol% de R est le groupe C₁ à C₈ alkyle ;
(D) un organohydrogénopolysiloxane qui a une viscosité à 25°C de 1 à 1 000 mPa.s et qui a au moins deux atomes d'hydrogène liés au silicium dans chaque molécule, en une quantité suffisante pour produire une valeur de 0,8 : 1 à 5 : 1 pour le rapport molaire des atomes d'hydrogène liés au silicium dans cet organohydrogénopolysiloxane à la quantité totale de groupes aliphatiquement insaturés dans les composants (A), (B) et (C) ; et
(E) un catalyseur de réaction d'hydrosilylation en une quantité catalytique.

2. Composition d'organopolysiloxane formant un revêtement de séparation durci sans solvant selon la revendication 1, **caractérisée en ce que** le composant (C) est un produit polymère formé par une polymérisation à l'équilibre de l'oligomère d'organosiloxane ramifié mentionné précédemment et de l'oligomère de diorganosiloxane mentionné précédemment en présence d'un catalyseur à base de phosphazène ou en présence d'un catalyseur à base de phosphazène et d'un catalyseur de silanolate de potassium.

3. Composition d'organopolysiloxane formant un revêtement de séparation durci sans solvant selon la revendication 1 ou 2, **caractérisée en ce que** le rapport molaire entre l'oligomère d'organosiloxane ramifié mentionné précédemment et l'oligomère de diorganosiloxane mentionné précédemment est un rapport qui produit un rapport molaire entre l'unité SiO_{4/2} et l'unité R₂SiO_{2/2} de 1 : 100 à 1 : 1250.

4. Composition d'organopolysiloxane formant un revêtement de séparation durci sans solvant selon l'une quelconque des revendications 1 à 3, **caractérisée en ce que** le composant (C) contient une moyenne d'au moins deux unités SiO_{4/2} dans chaque molécule.

5. Composition d'organopolysiloxane formant un revêtement de séparation durci sans solvant selon l'une quelconque des revendications 1 à 4, **caractérisée en ce que** le composant (C) est une gomme ou un liquide ayant une viscosité à 25°C de 10 000 à 1 250 000 mPa.s.

6. Composition d'organopolysiloxane formant un revêtement de séparation durci sans solvant selon l'une quelconque des revendications 1 à 5, **caractérisée en ce que** le composant (A) est représenté par la formule structurale moyenne (2)
R^{c}R₂SiO(RR^{c}SiO_{2/2})ₘ₁(R₂SiO_{2/2})ₘ₂SiR₂R^{c} (2)
où R est un groupe C₁ à C₈ alkyle ou un groupe phényle à condition qu'au moins 50 mol% de R dans la molécule soit le groupe C₁ à C₈ alkyle, R^{c} est un groupe C₂ à C₈ alcényle, **m1** est un nombre supérieur ou égal à zéro, **m2** est un nombre supérieur ou égal à 1, et **m1** + **m2** est un nombre qui confère à ce composant une viscosité à 25°C de 50 à 1 000 mPa.s ;
le composant (B) est représenté par la formule structurale moyenne (3)
R^{d}R₂SiO(RR^{c}SiO_{2/2})ₙ₁(R₂SiO_{2/2})ₙ₂SiR₂R^{d} (3)
où R est un groupe C₁ à C₈ alkyle ou un groupe phényle à condition qu'au moins 50 mol% de R soit le groupe C₁ à C₈ alkyle, R^{c} est un groupe C₂ à C₈ alcényle, R^{d} est un groupe choisi dans le groupe consistant en C₁ à C₈ alkyle, C₂ à C₈ alcényle, phényle, C₁ à C₈ alcoxy et un groupe hydroxyle, 0 à 0,1 % de la somme totale de R, R^{c} et R^{d} dans la molécule est le groupe C₂ à C₈ alcényle, au moins 50 % de la somme totale de R, R^{c} et R^{d} dans la molécule est un groupe C₁ à C₈ alkyle, **n1** est un nombre supérieur ou égal à zéro, **n2** est un nombre supérieur ou égal à 1 et **n1** + **n2** est un nombre qui confère à ce composant une viscosité à 25°C d'au moins 10 000 mPa.s ;
le composant (C) comprend l'unité SiO_{4/2}, l'unité R^{a}R^{b}₂SiO_{1/2} où R^{a} est un groupe organique choisi dans le groupe consistant en C₂ à C₆ alcényle, C₂ à C₆ alcynyle et C₁ à C₆ alkyle, et R^{b} est un groupe organique choisi dans le groupe consistant en C₁ à C₆ alkyle, phényle, C₁ à C₆ alcoxy, acryloxyalkyle et méthacryloxyalkyle, et l'unité R₂SiO_{2/2} où R est un groupe C₁ à C₈ alkyle ou un groupe phényle à condition qu'au moins 50 mol% de R soit le groupe C₁ à C₈ alkyle ; et
les groupes organiques liés au silicium dans le composant (D) sont un groupe C₁ à C₈ alkyle ou un groupe phényle où au moins 50 mol% de ceux-ci dans la molécule est le groupe C₁ à C₈ alkyle.

7. Composition d'organopolysiloxane formant un revêtement de séparation durci sans solvant selon la revendication 6, **caractérisée en ce que** R dans le composant (A) est un groupe méthyle ; R^{c} dans le composant (A) est un groupe vinyle ou un groupe hexényle ; R dans le composant (B) est un groupe méthyle ; R^{c} dans le composant (B) est un groupe vinyle ou un groupe hexényle ; R^{d} dans le composant (B) est un groupe choisi dans le groupe consistant en un groupe méthyle, un groupe vinyle, un groupe phényle et un groupe hydroxyle ; R^{a} dans le composant (C) est un groupe vinyle ; R^{b} dans le composant (C) est un groupe méthyle ; R dans le composant (C) est un groupe méthyle ; et les groupes organiques liés au silicium dans le composant (D) sont un groupe méthyle.

8. Substrat en forme de feuille **caractérisé en ce qu'**un revêtement de séparation durci provenant de la composition d'organopolysiloxane formant un revêtement de séparation durci sans solvant selon l'une quelconque des revendications 1 à 5 est présent sur une surface du substrat en forme de feuille.

9. Substrat en forme de feuille **caractérisé en ce qu'**un revêtement de séparation durci provenant de la composition d'organopolysiloxane formant un revêtement de séparation durci sans solvant selon la revendication 6 ou 7 est présent sur une surface du substrat en forme de feuille.

10. Substrat en forme de feuille portant un revêtement de séparation durci selon la revendication 8 ou 9, **caractérisé en ce que** le substrat en forme de feuille est un papier, un papier stratifié avec une polyoléfine, un film de résine thermoplastique ou une feuille métallique.
